Europäisches Patentamt

European Patent Office

Office européen des brevets

(11) Veröffentlichungsnummer: **0 219 015 B1**

(12) ## EUROPÄISCHE PATENTSCHRIFT

(45) Veröffentlichungstag der Patentschrift: **13.05.92**

(51) Int. Cl.⁵: **A01C 15/04**, A01C 7/10

(21) Anmeldenummer: **86113704.0**

(22) Anmeldetag: **03.10.86**

Die Akte enthält technische Angaben, die nach dem Eingang der Anmeldung eingereicht wurden und die nicht in dieser Patentschrift enthalten sind.

(54) **Verteilmaschine, insbesondere Pneumatikstreuer.**

(30) Priorität: **05.10.85 DE 3535628**
**08.11.85 DE 3539669**

(43) Veröffentlichungstag der Anmeldung:
**22.04.87 Patentblatt 87/17**

(45) Bekanntmachung des Hinweises auf die Patenterteilung:
**13.05.92 Patentblatt 92/20**

(84) Benannte Vertragsstaaten:
**ES FR GB NL SE**

(56) Entgegenhaltungen:
DE-A- 2 520 709        DE-A- 3 310 424
DE-C- 666 247          DE-C- 831 467
FR-A- 775 571          FR-A- 2 063 616
FR-A- 2 504 350        FR-A- 2 544 956

(73) Patentinhaber: **Amazonen-Werke H. Dreyer GmbH & Co. KG**
**Am Amazonenwerk 9-13**
**W-4507 Hasbergen-Gaste(DE)**

(72) Erfinder: **Dreyer, Heinz, Dr. Dipl.-Ing. Univ.**
**Am Amazonenwerk 7**
**W-4507 Hasbergen(DE)**
Erfinder: **Scheufler, Bernd, Dr.**
**Am Amazonenwerk 101**
**W-4507 Hasbergen(DE)**
Erfinder: **Hülsmann, Werner**
**Voxtruper Strasse 19**
**W-4500 Osnabrück(DE)**

(74) Vertreter: **Patentanwälte Grünecker, Kinkeldey, Stockmair & Partner**
**Maximilianstrasse 58**
**W-8000 München 22(DE)**

**Beschreibung**

Die Erfindung betrifft eine Verteilmaschine insbesondere Pneumatikdüngerstreuer gemäß des Oberbegriffs des Anspruchs 1.

Ein derartiger Pneumatikdüngerstreuer ist aus der Praxis bekannt. Dabei kann man über eine Fernbetätigungsvorrichtung die Ausbringmenge während des Ausbringvorganges kontinuierlich reduzieren bzw. erhöhen. Die Reduzierung bzw. Erhöhung der Ausbringmenge erfolgt über die gesamte Arbeitsbreite bzw. Streubreite des Pneumatikdüngerstreuers gleichmäßig.

Aus der gattungsgemäßen FR-A-2 504 350 ist ein Pneumatikdüngerstreuer bekannt, bei dem abschnittsweise einzelne Gruppen von Dosierelementen stillgesetzt werden können, um so die Arbeitsbreite zu reduzieren oder zu vergrößern. Es ist jedoch bei dieser Maschine nicht möglich, die Ausbringmenge abschnittweise zu verändern.

Der Erfindung liegt die Aufgabe zugrunde, auch bei einer gattungsgemäßen Verteilmaschine mit großen Streubreiten bis zu 24 m und mehr während des Ausbringvorganges die Ausbringmenge in Streifenbreiten variieren zu können, die wesentlich kleiner als die Streu- bzw. Arbeitsbreite sind.

Diese Aufgabe wird erfindungsgemäß durch die Maßnahmen gemäß dem Kennzeichen des Anspruchs 1 gelöst. Hierdurch läßt sich in einfachster Weise die Ausbringmenge vom Schleppersitz aus während des Ausbringens von Material abschnittsweise in Abschnitten der Streubreite vorzugsweise ausgehend von einem Grundausbringmengenwert vergrößern und verkleinern.

Somit kann vom Schleppersitz aus während des Ausbringvorganges für die eine Seite bzw. von Abschnitten der Streubreite bzw. Arbeitsbreite der Maschine eine andere Streumenge eingestellt werden als auf der anderen Seite bzw. als bei dem übrigen Teile der Arbeitsbreite bzw. Streubreite der Maschine. So kann beispielsweise auf der rechten Seite eine größere Mengen Material in bezug auf die Grundausbringmenge im Vergleich zu der linken Seite, wo weniger Material als die Grundausbringmenge ausgebracht wird, ausgebracht werden.

Dieses ist beispielsweise von sehr großer Bedeutung, wenn der Landwirt mit seiner Verteilmaschine, insbesondere Pneumatikstreuer mit großen Arbeitsbreiten während des Ausbringvorganges quer zum Hang fährt. So ist es dann erwünscht, daß auf der hangaufwärtigen Seite mehr Material als auf der hangabwärtigen Seite ausgebracht wird.

Des weiteren ist die abschnittsweise Reduzierung der Ausbringmenge vor allem bei Pneumatikdüngerstreuern mit großen Arbeitsbreiten von 18 bzw. 24m und mehr von großer Bedeutung, wenn während des Ausbringvorganges über einen schmalen Streifen, der wesentlich schmaler als die Arbeitsbreite des Düngerstreuer ist mehr oder weniger Material als über die übrige Arbeitsbreite ausgebracht werden soll, d.h., daß nur in diesem schmalen Bereich die Düngermenge vergrößert bzw. verkleinert werden und nicht über die gesamte Arbeitsbreite der Maschine, da dann in diesen anderen Bereichen Über- bzw. Unterdüngungen entstehen würden, die sich auf den Ertrag negativ auswirken. Somit ist es also durch die erfindungsgemäße Maßnahme möglich, den für verschiedene Abschnitte der Streubreite unterschiedlicher Düngerbedarf des Bodens bzw. der Pflanzen zumindest annähernd in Abschnitten anzupassen.

Bisher war es nämlich nur möglich über die gesamte Arbeitsbreite die Ausbringmenge zu verändern, so daß man dann, wenn man die Ausbringmenge vergrößert hat, in den Abschnitten, wo an sich nur die Grundausbringmenge ausgebracht werden sollte, Überdüngungen vorgenommen hat, so daß Lagergetreide die unvermeidliche Folge ist, so daß es Ertragseinbußen gibt. Der gleiche Nachteil tritt auch auf, wenn man die Ausbringmenge über die gesamte Arbeitsbreite verringert, wenn die Ausbringmenge verringert werden muß, da in gewissen Abschnitten der Arbeitsbreite sonst Überdüngungen, die Lagergetreide hervorrufen würden, verringern, so daß dann in den Abschnitten, an denen an sich mehr gedüngt werden müßte, bzw. die Grundausbringmenge ausgebracht werden müßte zu wenig Dünger ausgebracht wird, so daß auch in diesen Streifen dann Ertragseinbußen aufgrund mangelnder Düngung zu erwarten sind.

Dadurch, daß die Dosierräder zumindest in zwei Gruppen aufgeteilt sind, und die Ausbringmenge für zumindest zwei Gruppen von Dosierrädern zu verändern ist, wird erreicht, daß bei der Aufteilung in zwei Gruppen für die rechte und linke Seite unterschiedliche Ausbringmengen während des Ausbringmengenvorganges vom Schleppersitz aus einzustellen sind. Hierdurch wird bereits ein bedeutender Fortschritt erzielt gegenüber dem Stand der Technik, wo nur über die gesamte Arbeitsbreite die Ausbringmenge zu verändern ist. Eine weitere Verbesserung läßt sich noch dadurch erzielen, daß die Ausbringmenge in vier oder mehr Abschnitten unabhängig voneinander zu verändern ist.

Hierzu ist dann erfindungsgemäß vorgesehen, daß für jede Gruppe von Dosierrädern ein eigener regelbarer Antrieb vorgesehen ist. Infolge dieser Maßnahme läßt sich auf sehr einfache Weise die erfindungsgemäße unabhängige abschnittsweise Reduzierung der Ausbringmenge verwirklichen. Hierbei kann dann für jede Gruppe von Dosierrädern ein eigener Antriebsmotor vorgesehen sein.

Eine andere Lösung besteht darin, daß für jede Gruppe von Dosierrädern ein eigenes Regelgetriebe vorgesehen ist.

Ein einfach aufgebauter regelbarer Antrieb, der kompakt baut, ergibt sich dadurch, daß zumindest zwei regelbare auf Elektromotore den Antrieb der Dosierwalzengruppen vorgesehen sind, die über eine auf dem die Verteilmaschine ziehenden Schlepper angeordnete Regeleinrichtung derart vom Schleppersitz aus regelbar sind, daß sowohl ein Synchronlauf der Elektromotore mit gleichen Antriebsdrehzahlen als auch unterschiedliche Drehzahlen für die Elektromotore einstellbar sind, und daß die Elektromotore gleichzeitig und unabhängig voneinander stillsetzbar sowie einschaltbar sind. Bei den in dem Hauptpatent vorgeschlagenen Lösungsmöglichkeiten ist es nur sehr schwer möglich, einen Synchronlauf der jeweiligen Antriebe zu erreichen, so daß über die gesamte Streubreite die gleiche Ausbringmenge ausgebracht wird, wenn dies die Einsatzverhältnisse erfordern. Hier schafft die vorliegende Erfindung in überraschend einfacher Weise Abhilfe, indem sehr einfach zu regelnde Antriebsmotore, die als Elektromotore ausgebildet sind, eingesetzt werden. Diese Elektromotore lassen sich über eine relativ einfach aufgebaute Regelelektronik sehr genau steuern und regeln. Über die Regelelektronik läßt sich in einfachster Weise ein Synchonlauf der Elektromotore mit gleichen Antriebsdrehzahlen als auch mit jeweils unterschiedliche Drehzahlen in äußerst exakter Weise einstellen.

Damit die Elektromotore ein genügend großes Drehmoment aufweisen, um die Säräder antreiben zu können, wobei die Elektromotore dann auch noch relativ klein bauen sollen, ist erfindungsgemäß vorgesehen, daß die Elektromotore ein Untersetzungsgetriebe aufweisen. Von diesem Untersetzungsgetriebe werden dann die Dosierräder angetrieben.

Des weiteren sieht die Erfindung vor, daß die Elektromotore zwei Drehzahlbereiche aufweisen. Hierdurch kann dann über die elektrische Schaltung innerhalb der Elektromotore schon grundsätzlich der jeweilige Drehzahlbereich vorgewählt werden. Dieses ist von großer Bedeutung, wenn entweder eine kleine oder eine große Ausbringmenge an Material ausgebracht werden soll.

Um die vorzugsweise als Gleichstrommotore ausgebildeten Elektromotore zum Zwecke der Abdrehprobe antreiben zu können, ist im Stromnetz ein Akkumulator vorgesehen, der erfindungsgemäß so stark ausgelegt ist, daß die von dem Akkumulator gelieferte Stromstärke ausreicht, um zum Zwecke der Abdrehprobe die Dosierorgane antreiben zu können, wenn der Generator nicht angetrieben wird. Dieses ist vor allem dann von Bedeutung, wenn beispielsweise Mikrogranulat abgedreht werden soll. Um die Abdrehprobe nicht zu verfälschen, ist es wünschenswert, daß das Gebläse nicht von der Schlepperzapfwelle angetrieben wird. In dem Falle nämlich, wenn das Gebläse über einen Antrieb den Generator antreiben würde, um so vom Generator aus die Elektromotore mit Strom zu speisen, würde die Abdrehprobe durch die von dem Gebläse erzeugte Luftströmung die Abdrehprobe verfälscht werden.

Um auch bei großen Arbeitsbreiten die Streubreite in mehreren Teilarbeitsbreiten aufzuteilen und um die Streumenge in mehreren Abschnitten der Streubreite regeln zu können, ist erfindungsgemäß vorgesehen, daß mindestens 4 Elektromotore vorgesehen sind, die dann separat schalt-und regelbar sind.

Weiterhin sieht die Erfindung vor, daß die Elektromotore wahlweise in beiden Drehrichtungen antreibbar sind. Dieses ist von Bedeutung, wenn sich beispielsweise nach einer längeren Transportfahrt das sich im Vorratsbehälter befindliche Material im Bereich der Dosierräder derartig stark verfestigt hat, daß die Elektromotore aufgrund ihrer sehr geringen Antriebskraft nicht in der Lage sind die Dosierräder in Drehbewegung zu versetzen, werden die Elektromotore kurzzeitig so angetrieben, daß die Dosierräder entgegen der Förderrichtung umlaufen und so den vordersten Bereich des an den Dosierrädern anliegenden und verfestigten Materiales auflockern. Schon nach einer äußerst kleinen Rückwärtsdrehung ist das Material so weit aufgelockert, daß die Elektromotore in der Lage sind, die Dosierräder in Förderrichtung anzutreiben.

In einer bevorzugten Ausführungsform ist erfindungsgemäß vorgesehen, daß beim Einschalten des bzw. der Elektromotore zunächst eine kurzzeitige Rückwärtsdrehung gemacht wird, bevor die Elektromotore die Dosierwalzen in ihrer Förderrichtung antreiben. Hierbei kann dann der kurzzeitige Rückwärtslauf automatisch beim Einschalten der die Dosierorgane antreibenden Elektromotore erfolgen, indem in der elektrischen bzw. elektronischen Schaltung eine entsprechende Schaltung vorgesehen ist.

Des weiteren ist in einer Ausführungsform erfindungsgemäß vorgesehen, daß ein Handschalter vorgesehen ist, mit dem der Rückwärtslauf für die die Elektromotore antreibenden Dosierorgane einschaltbar ist. Dieses ist vor allem dann von Bedeutung, wenn während des Ausbringvorganges beispielsweise aufgrund von Verunreinigungen, die sich in dem auszubringenden Material befinden und zwischen den Dosierrädern und den Bodenklappen gelangen bzw. Materialklumpen zwischen die Dosierräder und die Bodenklappen gelangen, und so die Dosierorgane zum Stillstand bringen.

Durch einfaches Rückwärtslaufen der Elektromotore über die Handschalter kann dann diese Störung leicht vom Schleppersitz aus behoben werden.

In einer weiteren Ausführungsform ist erfindungsgemäß vorgesehen, daß die Dosierwalzen zumindest guppenweise elastisch ausweichbar angeordnet sind, so daß bei Überlastmomenten die Dosierwalzen ausweichen und anschließend wieder in ihre Ursprungsstellung zurückgedrückt werden. Infolge dieser Maßnahme können die Dosierwalzen ausweichen, wenn Materialklumpen oder sonstige großvolumige Körper, beispielsweise Steine etc. zwischen die Dosierwalzen und die Bodenklappen gelangen. So werden in einfacher Weise diese gruße Klumpen bzw. Fremdkörper ohne daß es zu einer Unterbrechung des Ausbringvorganges kommt, von den Dosierrädern herausgefördert, indem der Dosierspalt durch das nach oben Ausweichen der Dosierwalzen automatisch sich selbst vergrößert. Wenn diese Fremdkörper bzw. Materialklumpen die Bodenklappe passiert haben, läuft die Dosierwalze langsam wieder nach unten in ihre Ursprungsstellung zurück. Auch ist diese elastisch ausweichbare Aufhängung der Dosierwalzen von Vorteil, wenn nach einem langen Transportweg sich das Material im Bereich vor den Dosierwalzen verfestigt hat, so kann die Dosierwalze zunächst elastisch ausweichen und sich dann langsam in das Material hineinarbeiten, um so schon nach kurzer Zeit wieder in ihre Ursprungsstellung zu gelangen, um dann in exakter Weise das Material zu dosieren.

Um schnell laufende Elektromotore zum Antrieb der Dosierorgane verwenden zu können, ist erfindungsgemäß vorgesehen, daß die Elektromotore zumindest ein einstufiges Untersetzungsgetriebe aufweisen. Um möglichst gleiche Elektromotore bei einem Pneumatikdüngerstreuer einsetzen zu können, bei dem die Dosierorgane in einem Abstand in zwei parallelen Reihen angeordnet sind, ist erfindungsgemäß vorgesehen, daß der Elektromotor bzw. das Untersetzungsgetriebe einen doppelseitigen Abtrieb aufweisen. Hierdurch ist es möglich, die Elektromotore jeweils auf beiden Seiten des Vorratsbehälters von der gleichen Seite auf die Antriebswellen der Dosierräder aufzusetzen.

Weiterhin ist in einer Ausführungsform erfindungsgemäß vorgesehen, daß die Elektromotore derart eingeschaltet werden, daß sie jeweils kurzfristig verzögert nacheinander eingeschaltet werden. Hierdurch wird erreicht, daß beim Einschalten der Elektromotore keine übermäßig große Stromspitze auftritt, so daß das Stromnetz bzw. die den Strom erzeugenden Bauelemente relativ klein ausgelegt werden können. Hierbei braucht die Verzögerung nur so kurzfristig zu sein, daß sie praktisch nicht wahrnehmbar ist, und subjektiv so wahrgenommen wird, als ob alle Motore gleichzeitig eingeschaltet würden.

Des weiteren ist erfindungsgemäß vorgesehen, daß die Dosierräder leicht aus- und einbaubar angeordnet sind, so daß verschiedene Arten von Dosierrädern eingebaut werden können. So ist beispielsweise vorgesehen, daß für das Ausbringen von Normaldünger Dosierräder mit einer relativ groben Zahnung vorgesehen sind, während für das Ausbringen von Mikrogranulaten äußerst fein verzahnte Dosierräder vorgesehen sind. Um nun die Dosierräder leicht ein- und ausbauen zu können, ist es erforderlich, daß die Elektromotoren mit ihren Untersetzungsgetrieben ebenfalls leicht ein- und ausbaubar angeordnet sind. Hierbei ist es dann auch erforderlich, daß die Motore bzw. deren Kupplungen leicht von den Dosierrädern bzw. den Antriebswellen abkuppelbar und leicht wieder ankuppelbar sind. Hierbei können dann die Motore entweder seitlich verschoben bzw. verschwenkbar angeordnet sein. Auch ist es durchaus möglich, daß die Elektromotore über ein Schnellkupplung ganz von der Verteilmaschine gelöst werden.

Weitere Ausführungen und Merkmale sind den übrigen Unteransprüchen, der Beispielsbeschreibung und den Zeichnungen zu entnehmen. Hierbei zeigen

Fig. 1 einen erfindungsgemäß ausgebildeten Pneumatikdüngerstreuer in der Ansicht von hinten mit zwei Variatorgetrieben,

Fig. 2 die auf dem Schlepper anzuordnende Fernbedienungsvorrichtung, über die die Verstellung des regebaren Antriebes vorgenommen werden kann,

Fig. 3 die Dosierelemente des Düngerstreuers gemäß Fig 1 ausschnittsweise in der Seitenansicht und im Teilschnitt,

Fig. 4 einen weiteren erfindungsgemäßen Pneumatikdüngerstreuer mit einem regelbaren Reibradgetriebe in der Ansicht von hinten,

Fig. 5 einen weiteren erfindungsgemäßen Pneumatikdüngerstreuer mit zwei regelbaren Hydraulikmotoren in der Ansicht von hinten,

Fig. 6 einen weiteren erfindungsgemäßen Pneumatikdüngerstreuer mit einem Regelgetriebe und Schubraddosierrädern in der Seitenansicht im Teilschnitt und in Teilansicht,

Fig. 7 ein Verteilergestänge mit den von den Prallkörpern erzeugten Streufächern in Prinzipdarstellung und in der Ansicht von hinten,

Fig. 8 ein Grundstreubild in Prinzipdarstellung,

Fig. 9 ein erfindungsgemäßes Streubild, wobei auf der rechten Seite die Streumenge reduziert ist,

Fig. 10 ein weiteres Streubild, wobei auf der linken Seite die Ausbringmenge erhöht ist,

Fig. 11 ein weiteres Streubild, wobei das rechte Viertel der Streubreite reduziert ist,

Fig. 12 ein weiteres Streubild, wobei die äußeren Viertel jeweils eine reduzierte Ausbringmenge aufweisen.

Fig. 13 einen weiteren Pneumatikstreuer in erfindungsgemäßer Weise in der Ansicht von hinten,

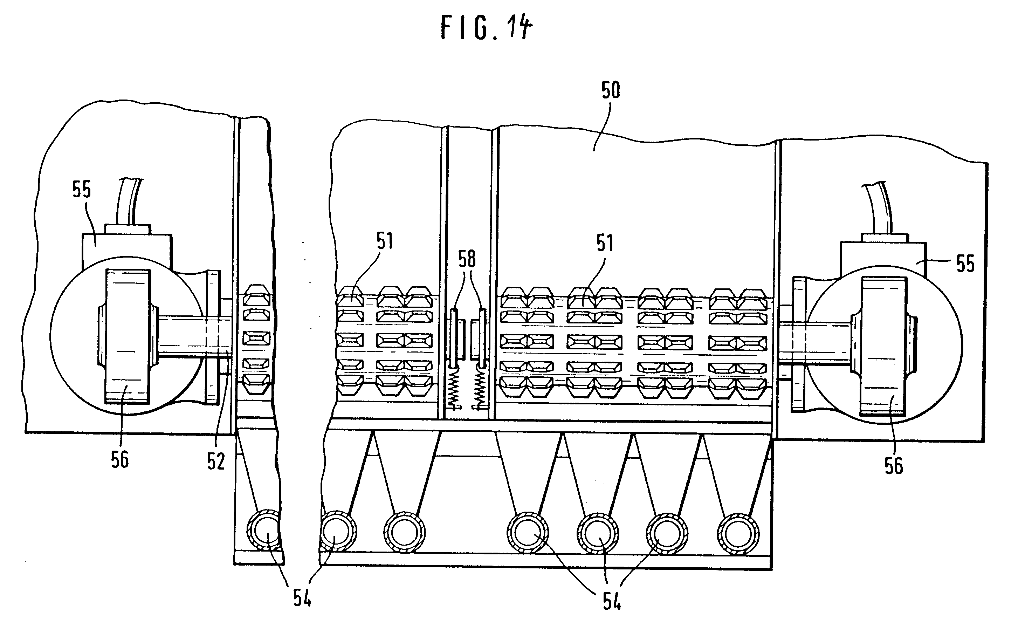

Fig. 14 den Pneumatikstreuer in Teildarstellung und in der Seitenansicht von links,

Fig. 15 einen Elektromotor mit Untersetzungsgetriebe in der Ansicht von hinten,

Fig.16 den Elektromotor gemäß Fig. 15 in der Seitenansicht

Fig. 17 die schwenkbare Anordnung der Dosierorgane in Prinzipdarstellung und im Teilschnitt sowie der Ansicht von hinten,

Fig. 18 eine anderes Untersetzungsgetriebe mit einem Elektromotor in der Seitenansicht,

Fig. 19 eine weitere Anordnung des Antriebes der Dosierorgane über eine Hohlwelle in Teilansicht des Pneumatikdüngerstreuers und in Seitenansicht,

Fig. 20 eine andere Anordnung des Antriebes der Dosierorgane über einen Elektromotor, wobei die Dosierorgane über schaltbare Kupplungen miteinander kuppelbar sind, in der Seitenansicht,

Fig. 21 noch eine ander Ausbildung des Antriebes der Dosierorgane in der Seitenansicht,

Fig. 22 ein Pneumatikdüngerstreuer in der Ansicht von hinten mit bordeigenem Stromerzeuger,

Fig. 23 ein Blockdiagramm für die Regelung der Elektromotore und

Fig. 24 ein weiteres Blockdiagramm für die Regelung der Elektromotore.

Der Pneumatikstreuer ist mit einem Vorratsbehälter 1 ausgestattet, der nicht durch ein dargestelltes dachförmiges Mittelteil in zwei untere trichterförmige Teile unterteilt ist. In den unteren Bereichen der trichterförmigen Teilen sind die Dosierelemente 2 auf der Dosierwelle 3 vor den Auslauföffnungen 4 des Vorratsbehälters 1 angeordnet. Unterhalb des Vorratsbehälters 1 sind die Rohrleitungen 6 angeordnet, die eine unterschiedliche Länge aufweisen und sich rechts und links quer zur Fahrtrichtung erstrecken. Diese Rohrleitungen 6 weisen jeweils Ausströmöffnungen auf, die jeweils nebeneinander quer zur Fahrtrichtung gesehen in einem Abstand zueinander angeordnet sind. Vor jeder Ausströmöffnung ist ein Prallkörper 7 angeordnet, auf denen das über die Dosierelemente 2 in die Rohrleitungen 6 geförderte Material mittels eines Luftstromes, der von einem Gebläse erzeugt wird, aufgeblasen wird. Durch das Aufblasen der Materialpartikel auf die Prallkörper 7 entsteht der aus einzelnen Streufächern zusammengesetzte Gesamtstreufächer, der ein Vielfaches der Breite des Vorratsbehälters beträgt.

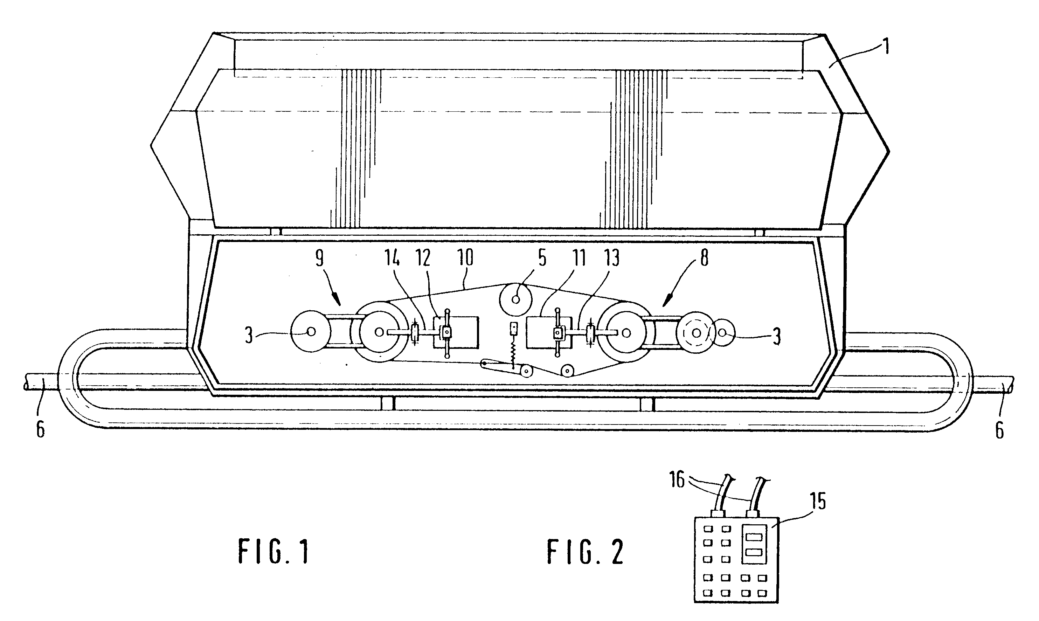

Die Dosierelemente 2 werden über einen regelbaren Antrieb angetrieben, der entsprechend dem Ausführungsbeispiel gemäß Fig. 1 aus den beiden Variatorgetrieben 8 und 9 besteht. Die Variatorgetriebe 8 und 9 werden von dem gemeinsamen Kettentrieb 10 von der Antriebswelle 5, die mit der Schlepperzapfwelle verbunden ist, angetrieben. Die Variatorgetriebe 8 und 9 können über die elektrischen Stellmotore 11 und 12 sowie dem Verstellmechanismus 13 sowie 14 vom Schleppersitz aus über die Fernbedienungsvorrichtung 15, die über die Kabel 16 mit den Verstellmotoren 11 und 12 verbunden ist, verstellt werden. Somit läßt sich über die Verstellung der Variatorgetriebe 8 und 9 die Drehzahl der Dosierelemente 2 und somit die Ausbringmenge des Pneumatikstreuers vom Schleppersitz aus während des Ausbringens von Material zu vergrößern bzw. verkleinern.

Das Variatorgetriebe 8 ist den auf der rechten Seite angeordneten Dosierelementen 2 zugeordnet, während da s Variatorgetriebe 9 den auf der linken Seite des Vorratsbehälters 1 angeordneten Dosierelementen 2 zugeordnet ist. Zwischen dem Variatorgetriebe 8 und der rechten Dosierwelle 3 ist noch das Umkehrgetriebe 17 angeordnet, so daß die Dosierelemente 2 auf der rechten Seite des Vorratsbehälters 1 in der richtigen Drehrichtung angetrieben werden.

Die Dosierelemente 2 sind auf jeder Seite des Vorratsbehälters nochmals in zwei Gruppen aufgeteilt, so daß der Pneumatikstreuer insgesamt vier Gruppen von Dosierelementen aufweist. Jeder Gruppe von Dosierelementen 2 ist noch ein Schaltgetriebe 18 bzw. 19 zugeordnet, welches ebenfalls über die Fernbedienungsvorrichtung 15 vom Schleppersitz aus zu schalten ist. Diese Schaltgetriebe 18 und 19 weisen drei Schaltstufen auf.

Die erste Gruppe 20 der Dosierelemente 2 wird von dem Variatorgetriebe 8 über das Umkehrgetriebe 17 und das Schaltgetriebe 18 angetrieben. Das Schaltgetriebe 18 und die Gruppe 20 der Dosierelemente 2 weist die Hohlwelle 21 auf, durch die die Antriebswelle 22 für die Gruppe 23 der Dosierelemente 2 über das Schaltgetriebe 19 angetrieben werden.

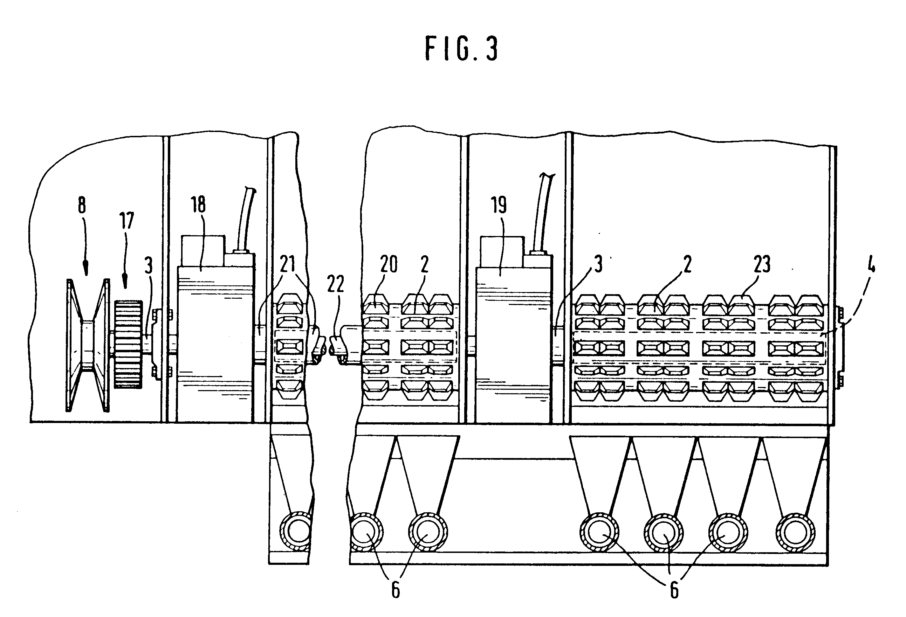

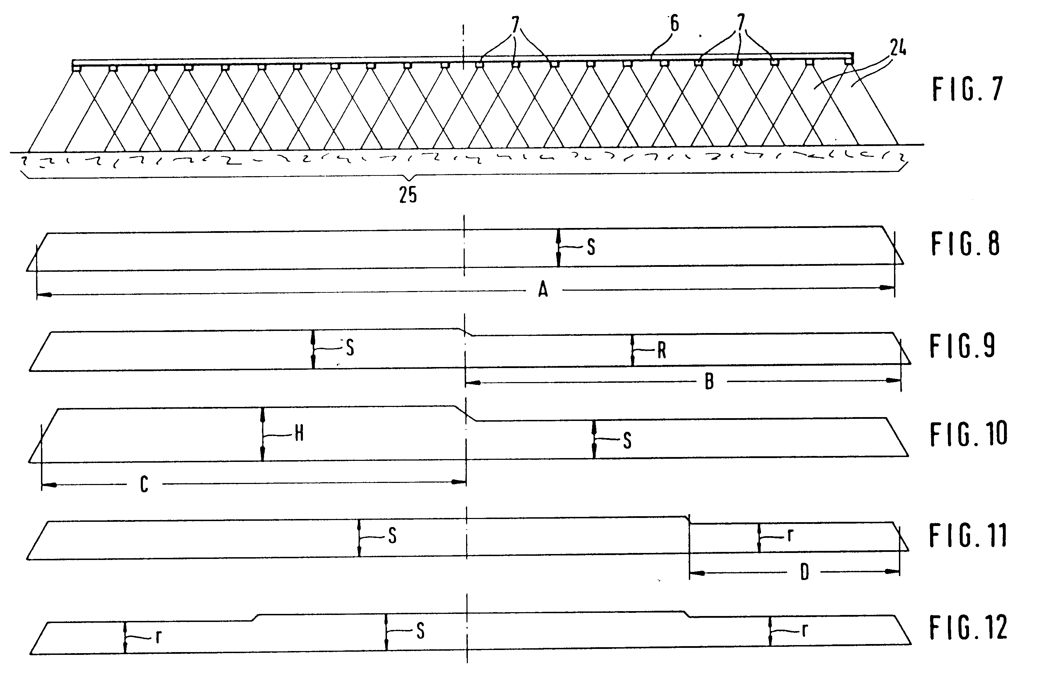

Im folgenden soll die Änderung der Ausbringmenge des Pneumatikstreuers 1 gemäß den Fig. 1 bis 3 anhand der Streubilder, wie sie in den Fig. 7 bis 12 dargestellt sind, erläutert werden: Während des Ausbringvorganges vom Material mit dem Pneumatikstreuer auf dem Feld wird der Dünger aus dem Vorratsbehälter 1 über die Dosierelemente 2 in regelbaren Mengen den Rohrleitungen 6 zugeführt. In den Rohrleitungen 6 wird das Material von dem von einem Gebläse erzeugten Luftstrom erfaßt und zu den in unterschiedlichen Abständen quer zur Fahrtrichtung gesehen nebeneinander angeordneten Ausströmöffnungen geblasen. Vor den Ausströmöffnungen der einzelnen Rohrleitungen 6 sind die Prallkörper 7 angeordnet, auf die das Material aufgeblasen wird. Durch das Aufblasen des Materiales auf die einzelnen Prallkörper 7 entstehen die einzelnen Prallfächer 24, die zusammengesetzt den Streufächer 25 ergeben. In dem Normalfall wird allen Rohrleitungen 6 des Pneumatikdüngerstreuers die gleiche Menge Material zugeführt, so daß über die gesamte Streubreite A der Dünger in der gleichmäßigen Streustärke S ausgebracht wird. Es ergibt sich somit dann ein Streubild mit einer gleichmäßigen Streustärke S, wie dieses in Fig. 8 dargestellt ist.

Soll nun auf der rechten Seite der Arbeitsbreite A über die halbe Arbeitsbreite B die Streustärke auf die reduzierte Streustärke R reduziert werden, während auf der linken Seite der Arbeitsbreite A die Grundstreustärke S beibehalten werden soll, wird über die Fernbedienungsvorrichtung 15 das Variatorgetriebe 8 verstellt, so daß über die Dosierwelle 3 die Gruppen 20 und 23 der Dosierelemente 2 mit einer kleineren Derhzahl als die Dosierelemente 2 auf der linken Seite des Vorratsbehälters 1 angetrieben werden. Über eine entsprechende elektrische Schaltung läßt sich erreichen, daß die Drehzahl der Dosierelemente über das Variatorgetriebe 8 sich langsam und kontinuierlich bis zu dem gewünschten kleineren Ausbringmengenwert ändert bzw. daß die Änderung sehr schnell vor sich geht. Wenn der Bereich, in dem auf der einen Seiten eine geringere Menge Dünger ausgebracht werden soll, überfahren worden ist bzw. man sich einer Fläche nähert, wo wieder der Grundausbringmengenwert entsprechend der Streustärke S ausgebracht werden soll, so wird wiederum über die Fernbedienungsvorrichtung 15 das Variatorgetriebe so verstellt, daß wieder die Grunddrehzahl eingestellt d.h., daß wieder die Grundausbringmenge ausgebracht wird.

Wenn nun während der Fahrt auf der linken Seite der Arbeitsbreite über die halbe Arbeitsbreite C aufgrund der zu geringen Nährstoffversorgung mehr Dünger entsprechend der Streustärke H gegenüber der Grundausbringstreustärke S auf der rechten Seite der Arbeitsbreite ausgebracht werden soll, so wird über die Fernbedienungsvorrichtung 15 das Variatorgetriebe 9 so verstellt, daß die Dosierelemente 2 auf der linken Seite des V orratsbehälters mit einer größeren Drehzahl als bei der Ausbringung des Materiales mit der Grundausbringmenge angetrieben werden , so daß in der linken Hälfte der Arbeitsbreite des Pneumatikdüngerstreuers das höheren Material in der Streustärke H ausgebracht wird. Wenn nun der Streifen mit der geringen Nährstoffversorgung zu Ende ist, wird wiederum vom Schleppersitz aus über die Fernbedienungsvorrichtung 15 das Variatorgetriebe 9 zurückgestellt, so daß die Dosierelemente 2 auf der linken Seite des Vorratsbehälters 1 wieder mit einer geringeren Drehzahl als bei dem Ausbringen der größeren Ausbringmenge werden, so daß wiederum der Grundausbringmengenwert ausgebracht wird.

Wenn der Landwirt während des Ausbringens des Düngers mit dem Pneumatikdüngerstreuer einen Streifen überfährt, wobei in dem äußersten rechten Viertel der Arbeitsbreite A der Boden eine sehr gute Nährstoffversorgung aufweist, so daß in diesem äußersten Viertel der Arbeitsbreite des Pneumatikdüngerstreuers weniger Dünger als die Grundausbringmenge ausgebracht werden müßte wird auch hier die Streustärke bzw. Ausbringmenge reduziert . In diesem Falle wird die Drehzahl der äußersten Gruppe 23 der Dosierelemente 2 über das Schaltgeriebe 19 reduziert. Die Umschaltung des Schaltgetriebes 19 erfolgt ebenfalls über die Fernbedienungsvorrichtung 15 vom Schleppersitz aus. Somit wird in dem äußersten Viertil über die Breite D der Dünger in der reduzierten Streustärke r entsprechend Fig. 11 ausgebracht, während über den übrigen Teil der Arbeitsbreite der Dünger in der Streustärke S ausgebracht wird. Wenn diese sehr gut versorgte Bodenstreifen zu Ende geht, wird wiederum über die Fernbedienungsvorrichtung 15 das Schaltgetriebe 19 umgeschaltet, so daß wieder die Grundstufe eingeschaltet ist, so daß dann auch in diesem äußersten Viertel der Arbeitsbreite des Pneumatikdüngerstreuers der Dünger in der Streustärke S wieder ausgebracht wird.

Falls nun, wie es in Fig. 12 dargestellt ist, jeweils in den beiden äußeren Vierteln der Arbeitsbreite des Pneumatikdüngersteuers die Ausbringmenge reduziert werden muß, wird über die Fernbedienungsvorrichtung 15 jeweils das Schaltgetriebe 19 auf der rechten und der linken Seite des Vorratsbehälters 1 umgeschaltet, so daß in den beiden äußeren Vierteln der Arbeitsbreite des Pneumatikdüngerstreuers der Dünger mit der wie in Fig. 12 dargestellten reduzierten Streustärke r gegenüber der Grundstreustärke S in der Mitte des Düngerstreuers ausgebracht.

Wenn nun diese sehr gut mit Nährstoffen versorgten äußeren Streifen nicht mehr vorhanden sind, werden über die Fernbedienungsvorrichtung 15 die beiden Schaltgetriebe 19 wieder in ihre Grundschaltposition zurückgeschaltet.

In den vorstehenden Ausführungen ist erläutert worden, daß die Ausbringmenge des Pneumatikdüngerstreuers vom Schleppersitz aus während des Ausbringens von Material abschnittsweise in Abschnitten der Streubreite ausgehend von einem Grundausbringmengenwert zu vergrößern und zu verkleinern ist. Hierbei sind in dem Ausführungsbeispiel die Dosierelemente in insgesamt vier Gruppen aufgeteilt und die Ausbringmenge für jede Gruppe ist unabhängig voneinander zu verändern und zwar über die beiden Variatorgetriebe 8 und 9 in Verbindung mit den Schaltgetrieben 18 und 19 sowie der Schaltgetriebe 18 und 19 allein. Des weiteren kann jeweils für die rechte und linke Seite der Streubreite die Ausbringmenge unabhängig voneinander variiert werden, indem die Variatorgetriebe 8 und 9 unabhängig voneinander über die Fernbedienungsvorrichtung 15 zu verstellen ist. Somit ist es beispielsweise möglich, daß auf der rechten Seite der Streubreite eine größere Menge Dünger in bezug auf die Grundausbringmenge ausgebracht wird, während auf der linken Seite der Arbeitsbreite des Pneumatikdüngerstreuers eine geringere Menge Material als die Grundausbringmenge ausgebracht wird. Wenn beispielsweise die Ausbringmenge in vier Abschnitte unterteilt ist, so kann beispielsweise für jeden Abschnitt der Arbeitsbreite eine u nterschiedliche Ausbringmenge eingestellt werden, die gleich der Grundausbringmenge oder größer sowie kleiner als die Grundausbringmenge ist.

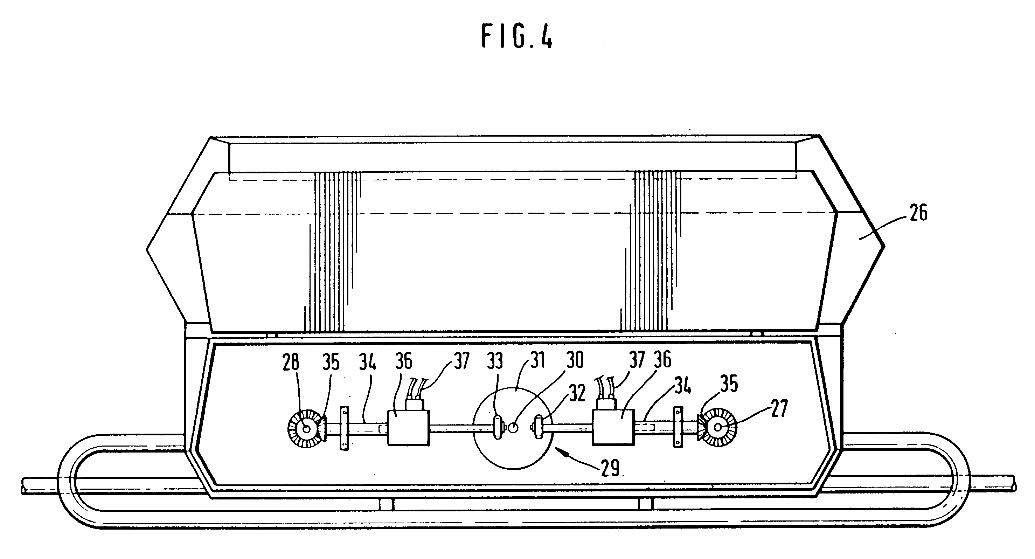

Der Pneumatikstreuer gemäß den Fig. 4 weist den Vorratsbehälter 26 auf, der durch ein nicht dargestellten dachförmiges Mittelteil in zwei trichterförmige Abschnitte unterteilt ist. In dem unteren Bereich der trichterförmigen Abschnitte des Vorratsbehälters 26 sind nicht dargestellte Auslauföffnungen angeordnet, vor denen ebenfalls nicht dargestellte Dosierelemente angeordnet sind. Diese Dosierelemente werden von den Dosierwellen 27 und 28 über das Regelgetriebe 29 angetrieben. Die Eingangswelle 3 des Regelgetriebes 29, ist über eine nicht dargestellte Gelenkwelle mit einem ebenfalls nicht dargestellten Schlepper, an dem der Pneumatikdüngerstreuer angebaut ist, angetrieben.

Das Regelgetriebe 29 ist als Reibradgetriebe ausgebildet. Das Reibradgetriebe weist die Reibscheibe 31 auf, auf denen die beiden Reibräder 32 und 33 anliegen. Die Reibräder 32 und 33 sind über die Wellen 34 mit dem Kegeltrieb 35 kraftschlüssig mit den Dosierwellen 27 und 28 verbunden. Die Wellen 34 sind als ineinander verschiebbare Wellen ausgebildet, so daß sie über die Stellmotore 36 ineinander verschoben werden können, somit können die Reibräder 32 und 33 auf der Reibscheibe 31 in radialer Richtung verschoben werden, so daß je nach Abstand der Reibräder 32 und 33 zu der Eingangswelle 30 sich verschiedene Abtriebsdrehzahlen eingestellt werden können. Die elektrischen Stellmotoren 36 sind über Kabel 37 mit einer Fernbedienungsvorrichtung, die auf dem Schlepper, der den Pneumatikdüngerstreuer trägt, angeordnet sind, verbunden. Somit läßt sich also vom Schleppersitz aus über die Fernbedienungsvorrichtung und die Stellmotore 36 die Drehzahl der Dosierwellen 27 und 28 der Dosierelemente auf der linken bzw. auf der rechten Seite des Vorratsbehälters in einfacher Weise unabhängig voneinander sowie gemeinsam verändern.

Durch die Änderung der Drehzahl der Dosierwellen 27 und 28 über das als Reibradgetriebe 23 ausgebildete Regelgetriebe läßt sich während des Ausbringens von Material die Ausbringmenge abschnittsweise in Abschnitten der Streubreite verändern und zwar in zwei Abschnitten, so daß für die rechte Hälfte der Streubreite eine andere Ausbringmenge unabhängig von der linken Hälfte der Streubreite eingestellt werden kann.

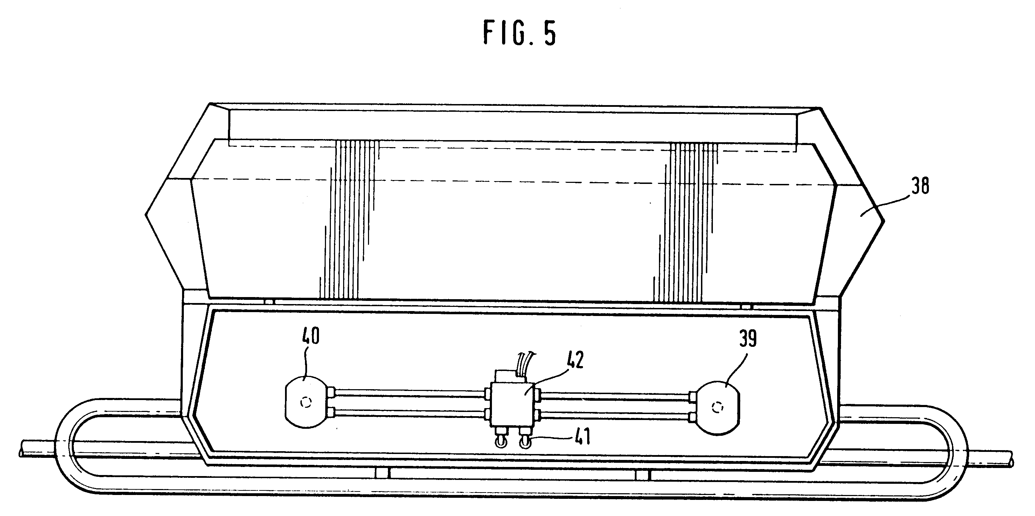

Der Pneumatikdüngerstreuer gemäß Fig. 5 weist einen Vorratsbehälter 38 auf, der durch ein dachförmiges Mittelteil in zwei trichterförmige Hälften unterteilt ist. Die beiden trichterförmigen unteren Teile weisen Auslauföffnungen in ihrem unteren Bereich auf, vor denen Dosierelemente angeordnet sind. Diese Dosierelemeten werden über die Hydraulikmotoren 39 und 40 angetrieben. Der Hydraulikmotor 39 treibt die auf der rechten Seite des Vorratsbehälers 38 angeordneten Dosierelemente an, während der Hydraulikmotor 40 die auf der linken Seite des Vorratsbehälters angeordneten Dosierelemente antreibt. Die Hydraulikmotoren 39 und 40 sind über Hydraulikschläuche 41 an die Hydraulikanlage des den Pneumatikdüngerstreuer ziehenden Schleppers angeschlossen. Zwischen den Schläuchen 41, die mit der Hydraulikanlage des Schleppers verbunden sind ist daß über eine Fernbedienungsvorrichtung einzustellende einstellbare Stromteilerventil 42 angeordnet. Des weiteren sind den Ölmotoren 39 und 40 noch einzelne Regelventile zugeordnet, über die die den Ölmotoren 39 und 40 zufließende Ölmenge eingestellt wird. Über das einstellbare Stromteilerventil 42 kann in einfacher Weise die Drehzahl der Hydraulikmotore 39 und 40 und somit die Drehzahl der Dosierelemente für die rechte bzw. linke Seite unabhängig jeweils voneinander eingestellt werden. Hierdurch ist es in einfacher Weise möglich, daß die Ausbringmenge während des Ausbringens von Material abschnittsweise in Abschnitten der Streubreite ausgehend von einem Grundausbringmengenwert zu vergrößern und zu verkleinern ist.

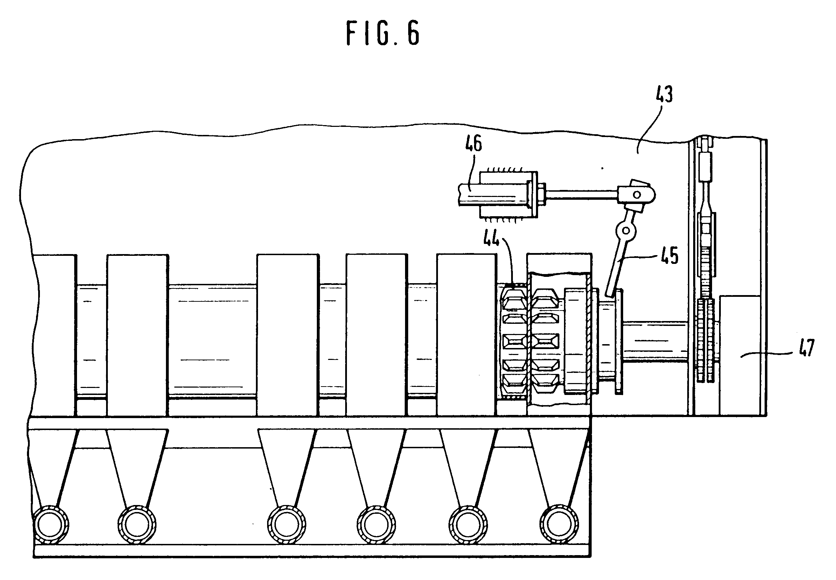

Der Pneumatikdüngerstreuer gemäß der Fig. 6 weist wiederum einen Vorratsbehälter 43 auf, der durch ein dachförmiges Mittelteil in zwei trichterförmige Abschnitte unterteilt ist. In dem unteren Bereich der beiden trichterförmigen Abschnitte sind Auslauföffnungen angeordnet, vor denen die Dosierelemente 44 angeordnet sind. In der Fig. 6 sind nur die Dosierelemente auf der linken Seite des Vorratsbehälters dargestellt. Die Dosierelemente 44 sind als axial verschiebbare Schubräder ausgebildet. Die Dosierelemente 44 können über den Hebel 45 und der Fernbedienungsvorrichtung 46, die als Bowdenzug ausgebildet ist, in axialer Richtung verschoben werden, so daß die Dosierelemente 44 mit unterschiedlichen Breiten das Material fördern. Durch das axiale Verschieben der Dosierräder 44 kann die Ausbringmenge des Materiales vergrößert bzw. verkleinert werden. Die Dosierelemente 44 werden über ein nicht dargestelltes Bodenrad über das Regelgetriebe 47 angetrieben. Über das Regelgetriebe 47 können die Dosierelemente 44 mit unterschiedlichen Drehzahlen angetrieben werden. Somit läßt sich über das Regelgetriebe 47 für sämtliche Dosierelemente 44 die Ausbringmenge einstellen und über eine an das Regelgetriebe 47 angeschlossene Fernbedienungsvorrichtung vom Schleppersitz aus insgesamt verändern. Des weiteren kann die Ausbringmenge in Abschnitten der Streubreite durch das axiale Verschieben der einzelnen Gruppen von Dosierelementen 44 unabhängig voneinander verändert werden.

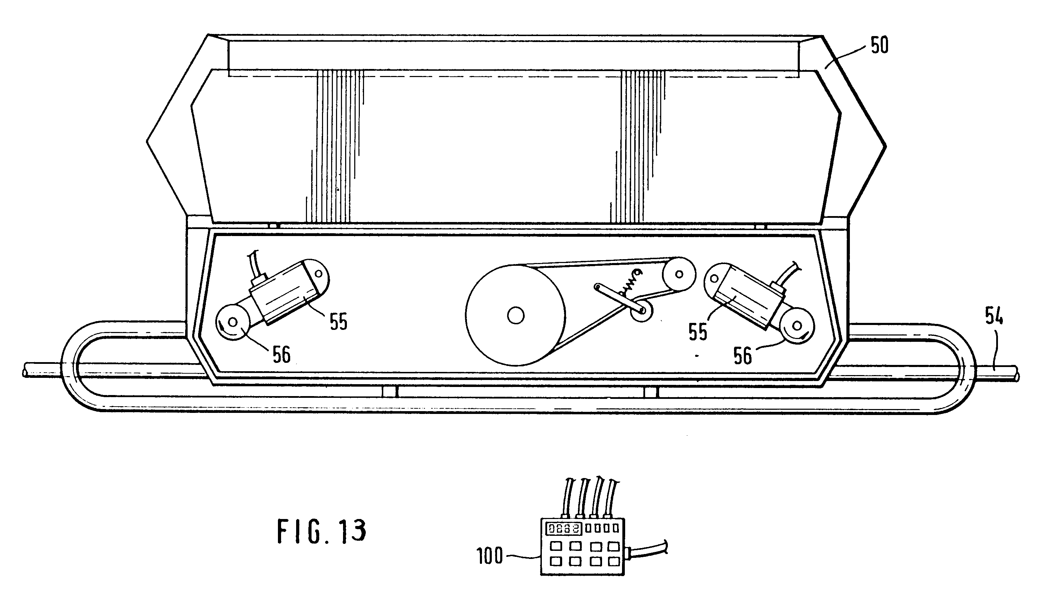

Der Pneumatikstreuer gemäß Fig. 13 ist mit einem Vorratsbehälter 50 ausgestattet, der durch ein nicht dargestelltes dachförmiges Mittelteil in zwei untere trichterförmige Teile unterteilt ist. In den unteren Bereich der trichterförmigen Teile sind die Dosierelemente 51 auf der Dosierwelle 52 vor den Auslauföffnungen 53 des Vorratsbehälters 55 angeordnet. Unterhalb des Vorratsbehälters 50 sind die Rohrleitungen 54 angeordnet, die eine unterschiedliche Länge aufweisen und sich rechts und links quer zur Fahrtrichtung erstrecken. Diese Rohrleitungen 54 weisen jeweils Ausströmöffnungen auf, die jeweils nebeneinander quer zur Fahrtrichtung gesehen in einem Abstand zueinander angeordnet sind. Vor jeder Ausströmöffnung ist ein Prallkörper angeordnet, auf den das über die Dosierelemente 51 in die Rohrleitungen 54 geförderte Material mittels eines Luftstromes, der von einem Gebläse erzeugt wird, aufgeblasen wird. Durch das Aufblasen der Materialpartikel auf die Prallkörper entsteht ein aus einzelnen Streufächern zusammengesetzter Gesamtstreufächer, der ein Vielfaches der Breite des Vorratsbehälters beträgt.

Die Dosierelemente 51 werden über einen regelbaren Antrieb angetrieben, der aus den vier Elektromotoren 55 mit den Untersetzungsgetrieben 56 besteht. Auf jeder Seite des Vorratsbehälters 50 sind jeweils zwei Gruppen von Dosierelementen 51 angeordnet, so daß die Verteilmaschine insgesamt vier Gruppen von Dosierelementen aufweist. Jede Gruppe von Dosierelementen 51 wird von einem Elektromotor 55 über das Untersetzungsgetriebe 56 angetrieben. Die jeweilige Dosierwelle 52 der Dosierelemente 51 ist jeweils seitlich aus der Lagerung herausgeführt, so daß auf diesen Enden der Dosierwelle 52 das Untersetzungsgetriebe 56 des jeweiligen Elektromotors 55 angeordnet werden kann. Das Untersetzungsgetriebe 51 weist einen Innenvierkant auf, der auf dem Vierkantprofil der Dosierwelle 52 aufgesetzt ist. Jede Gruppe von Dosierelementen ist über die Hebel 58 gegen die Kraft der Feder 59 elastisch ausweichbar angeordnet. An dem einen Ende der Hebel 58 ist die Lagerung für die Dosierwellen 52 der Dosierelemente 51 angebracht. Das andere Ende der Hebel 58 ist mittels eines Bolzens an einer Wand des Vorratsbehälters 50 schwenkbar gelagert. Hierbei fluchten die Schwenkachsen der Hebel 58 und die Schwenkachsen der Elektromotore miteinander.

Der Innenvierkant 57 des Untersetzungsgetriebes 56 des Elektromotors 55 ist durchgehend ausgebildet, so daß das Untersetzungsgetriebe von beiden Seiten auf ein Ende der jeweilige Dosierwelle 52 aufgesteckt werden kann. Es können somit gleiche Elektromotore und gleiche Untersetzungsgetriebe verwendet werden. Dieses hat Vorteile für die Großserie.

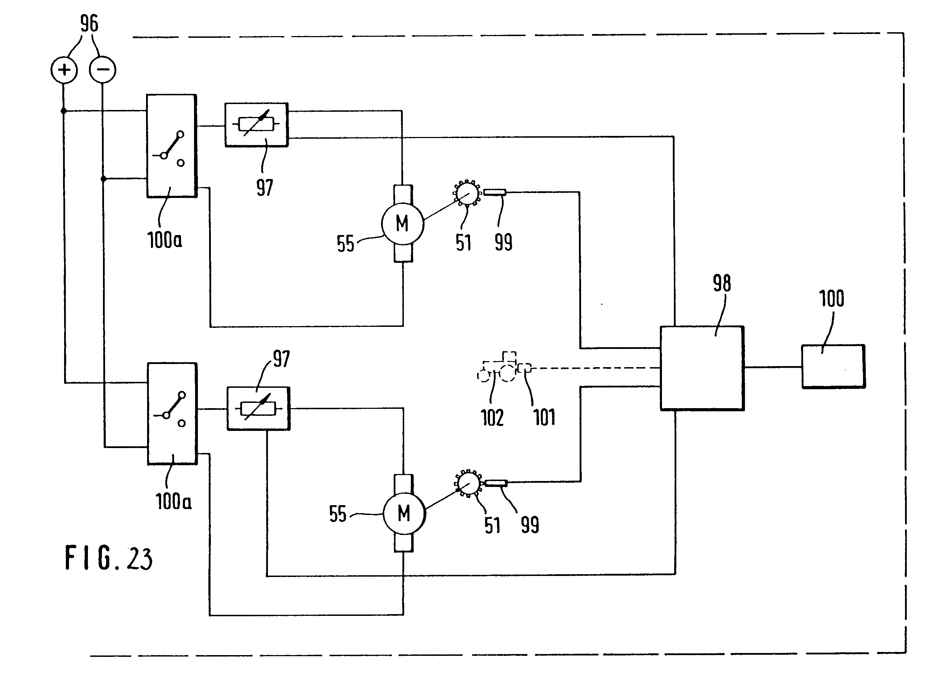

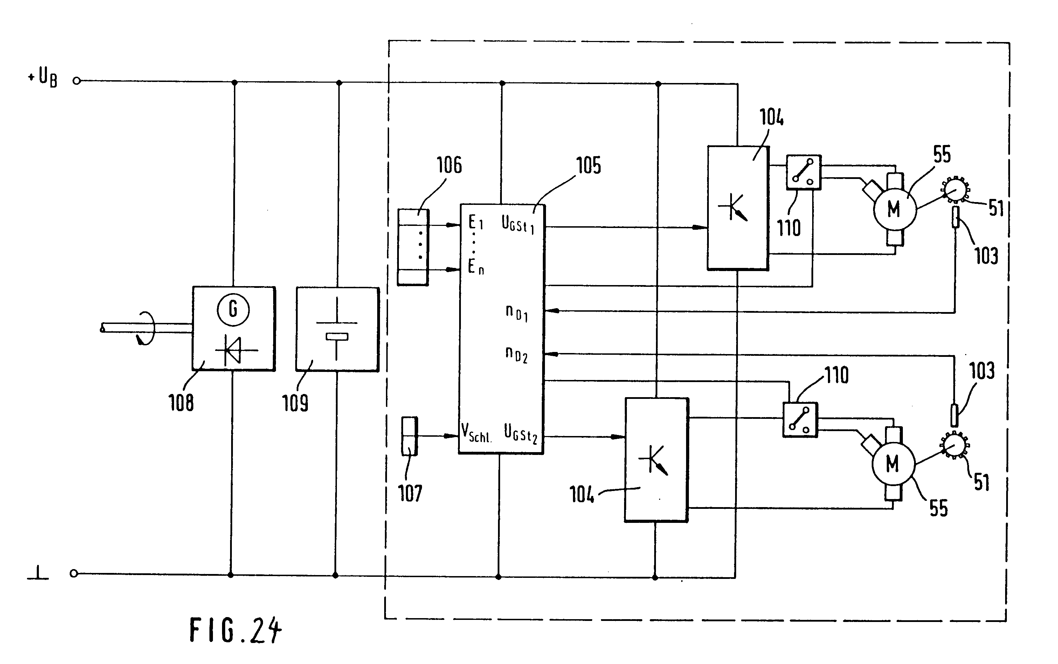

Der Antrieb der Elektromotore sowie die Regelung der Drehzahl der Elektromotore wird weiter unten an Hand der Blockdiagramme in den Fig. 23 und 24 näher erläuter.

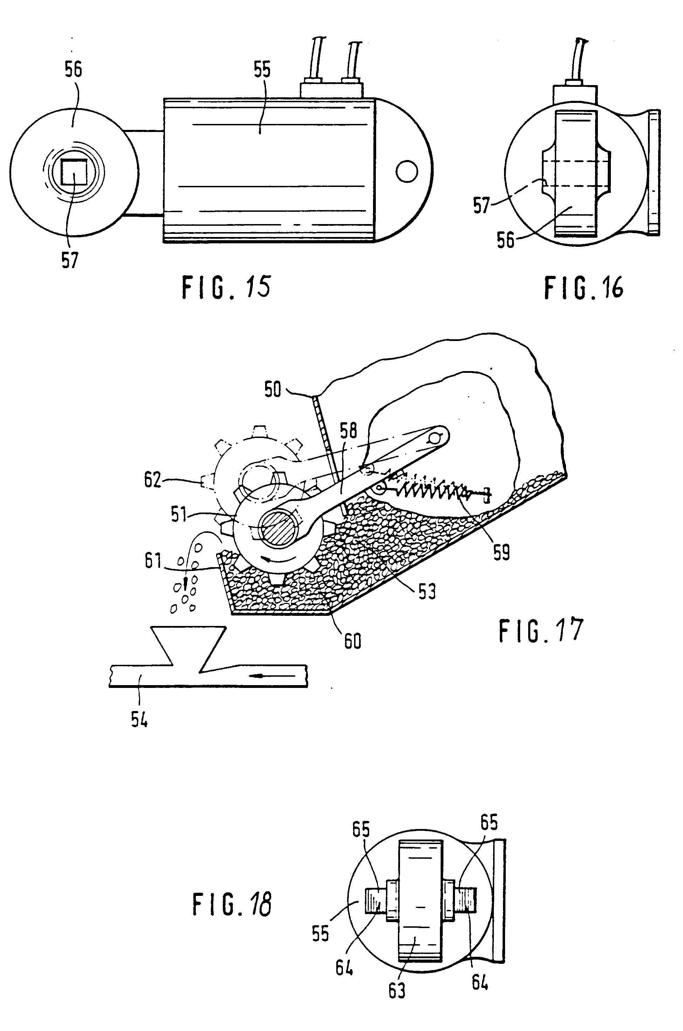

Wenn sich wie in Fig. 17 angedeutet ist, im Bereich der Auslauföffnungen 53 und dem Bereich der Dosierelemente 51 das Material 60 sich stark verfestigt hat, so daß beim Einschalten der Elektromotore 55 das Material von den Dosierelementen 51 nicht ohne weiteres dosiert werden kann bzw. wenn größere Klumpen zusammengebackenen Materiales 60 zwischen den Dosierelementen 51 und der Bodenplatte 61 gelagen, so weichen die Dosierelemente 51 und die Elektromotore entgegen der Kraft der Feder 59 nach oben, beispielsweise in die mit strichpunktierten Linien angedeutete Stellung 62 aus, so daß die Elektromotore nicht überlastet werden bzw. es zu keinen Beschädigungen an den Dosierelementen 51 kommt. Nach und nach wird das Material, welches sich vor den Auslauföffnungen 53 und oberhalb der Bodenplatte 63 befindet von den Dosierelementen 51 herausgefördert, so daß die Dosierwalze 51 aufgrund der auf sie einwirkende Kraft durch die Feder 59 wieder in ihre Ursprungslage zurückgezogen bzw. gedrückt wird.

Das in Fig. 18 dargestellte Untersetzungsgetriebe 63 weist die beiden Abtriebswellen 64 mit den beiden Außenvierkantenden 65 auf, so daß auch dieses Untersetzungsgetriebe 63 mit dem angeflanschten Elektromotor 55 über eine entsprechende Kupplung, die ein Innenkantprofil aufweist, mit Dosierwellen verbunden werden kann.

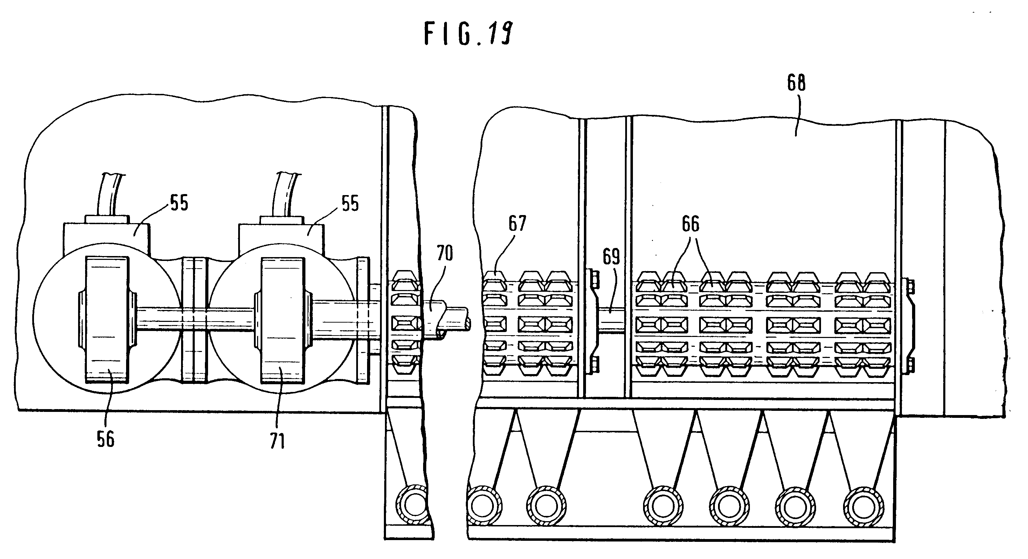

Bei der Verteilmaschine gemäß der Fig. 19 sind die Dosierelemente 66 ebenfalls entsprechend der Dosierelemente 51 gemäß dem Ausführungsbeispiel der Fig. 13 bis 5 auf beiden Seiten des Vorratsbehälters vor Auslauföffnungen des Vorratsbehälters 68 angeordnet. Die Dosierelemente 66 sind auf der Dosierwelle 69 drehfest angeordnet. Die Dosierelemente 67 sind auf der als Hohlwelle ausgebildeten Dosierwelle 70 drehfest angeordnet. Die Dosierelemente 66 werden über die Dosierwelle 69, die durch die Hohlwelle 70 geführt ist von dem Elektromotor 55 der das Untersetzungsgetriebe 56 aufweist, angetrieben. Die Dosierelemente 67 werden über die Hohlwelle 70 von dem Elektromotor 55 mit dem Untersetzungsgetriebe 71, welches einen entsprechenden Vierkant für die Dosierwelle 70 aufweist, angetrieben. Die Regelung und der Antrieb der Dosierelemente über die Elektromotore 55 wird weiter unten anhand der Blockdiagramme gemäß den Fig. 23 und 24 im einzelnen erläutert.

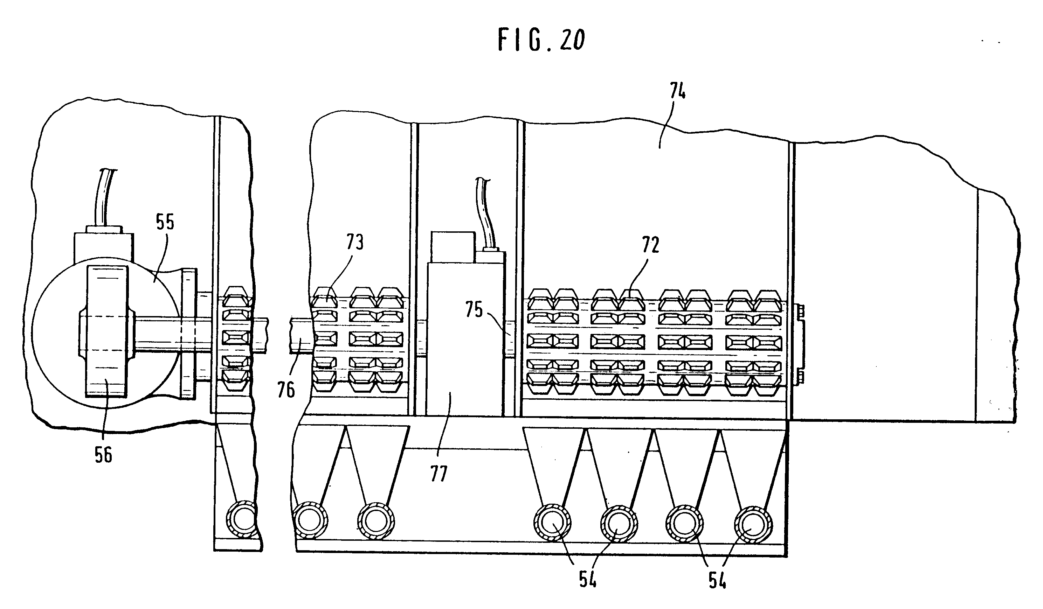

Die Dosierelemente 72 bei der Maschine gemäß Fig. 20 sind wiederum auf den beiden Seiten des Vorratsbehälters angeordnet, wobei nur die auf der einen Seite des Vorratsbehälters 73 angeordneten Dosierelemente 72 und 73 dargestellt sind. Die Dosierelemente 72 sind auf der Dosierwelle 75 angeordnet, während die Dosierelemente 73 auf der Dosierwelle 76 angeordnet sind. Zwischen der Dosierwelle 75 und der Dosierwelle 76 ist die elektrisch schaltbare Kupplung 77 angeordnet, so daß die Dosierelemente 72 und 73 getrennt bzw. die Dosierelemente 73 alleine angetrieben werden können. Durch die Kupplung 77 können also die Dosierelemente 72 stillgesetzt werden, so daß die Arbeitsbreite über den Abschnitt zu reduzieren ist, der mit dem Material bestreut würde, welches die Dosierelemente 72 in die Rohrleitungen 54 fördern würden. Die Dosierwelle 76 weist auf ihrem aus dem Lager herausgeführten Ende ein Vierkant- profil auf, auf welches das Innenvierkant des Untersetzungsgetriebes 56, welches an den Elektromotor 55 angeflanscht ist, aufgesteckt wird. Über den Elektromotor 55 und das Untersetzungsgetriebe 56 werden so die Dosierelemente 72 und 73 angetrieben. Der Antrieb und die Regelung der Drehzahlen des Elektromotors 55 bzw. der Dosierelemente 72 und 73 wird später anhand der Blockdiagramme gemäß den Fig. 11 und 12 im einzelnen erläutert.

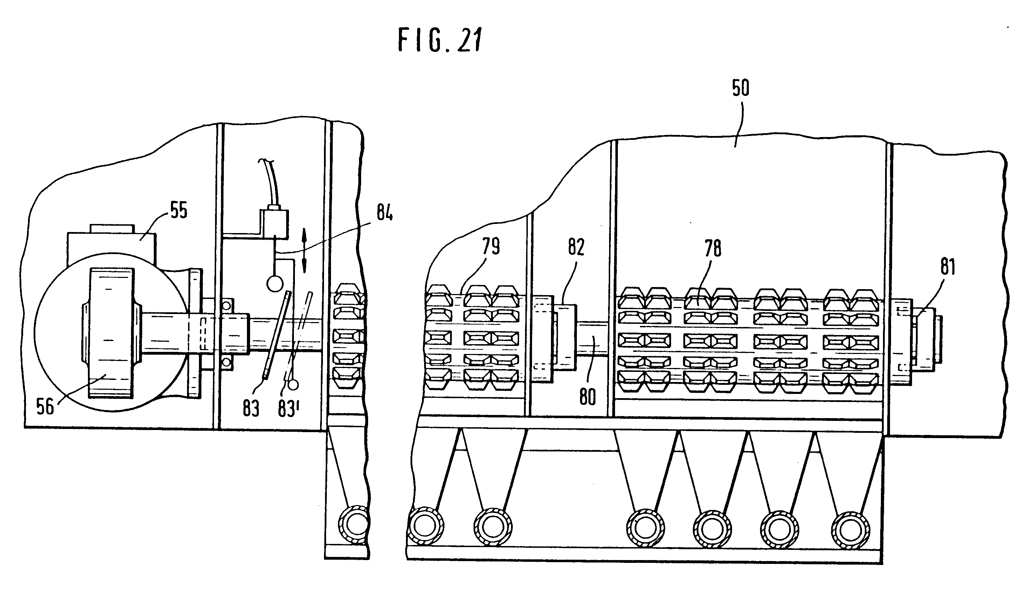

Bei dem Pneumatikdüngerstreuer gemäß Fig. 21 sind auf beiden Seiten des Vorratsbehälters 50 jeweils die Gruppen von Dosierelementen 78 und 79 angeordnet, so daß der Pneumatikdüngerstreuer insgesamt vier Gruppen von Dosierelementen aufweist. Die Dosierelemente 78 und 79 weisen eine Hohlwelle auf. Durch diese Hohlwellen ist die Dosierwelle 80 axial verschiebbar geführt. Die Dosierwelle 80 weist die Kupplungen 81 und 82 auf. Die Dosierwelle 80 wird von dem Elektromotor 55 und dem Untersetzungsgetriebe 56 angetrieben. Zwischen dem Untersetzungsgetriebe 56 und der Dosierwelle 80 ist eine Schiebekupplung angeordnet. Weiterhin ist auf der Dosierwelle 80 die Taumelscheibe 83 angeordnet, die mit dem Schalmechanimus 84 zusammenwirkt, angeordnet. Der Schaltmechanimus 84 ist über einen Hubmagneten hin- und herbewegbar. Wird der Schaltmechanismus 84 in die dargestellte Position gebracht, so wird, wenn die Taumelscheibe 83 aufgrund der Drehbewegungen der Dosierwelle 80 gegen den Schaltmechanismus läuft, die Dosierwelle mit den Kupplungen 81 und 82 nach rechts verschoben, so daß die Taumelscheibe 83 die mit strichpunktierten Linien eingezeichnete Stellung 83' einnimmt. Wenn die Dosierwelle 80 nach rechts verschoben ist, ist die Kupplung 81 aus der Kupplung der Dosierelemente 78 ausgekuppelt, so daß die Dosierelemente 78 zum Stillstand gelangen. Hierdurch kann die Streubreite über einen Teilabschnitt reduziert werden. Die Regelung über die Elektromotore 55 wird anhand der Blockdiagramme in den Fig. 23 und 24 näher erläutert.

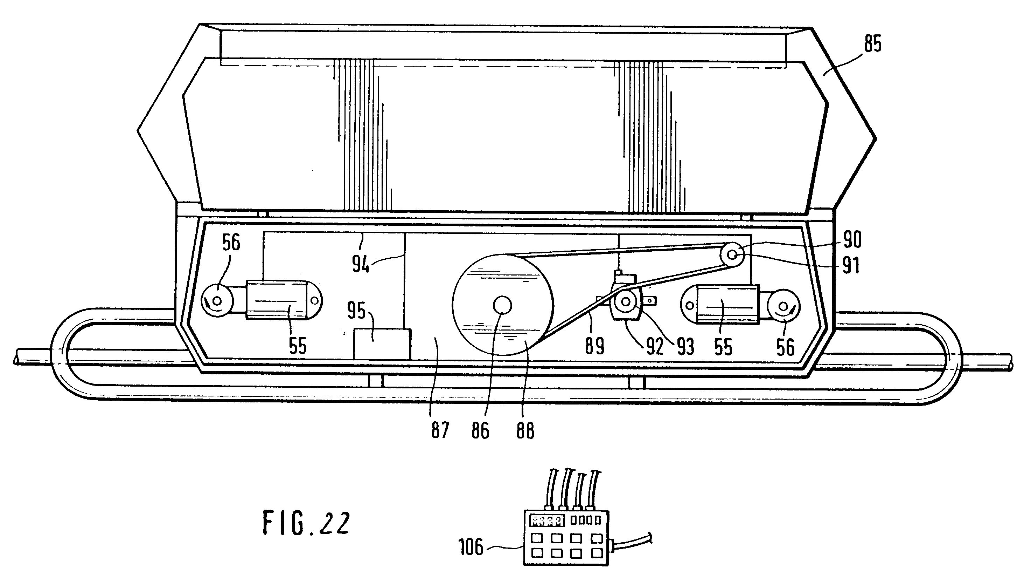

Der Pneumatikstreuer gemäß Fig. 22 weist den Vorratsbehälter 85 auf, der durch ein nicht dargestelltes dachförmiges Mittelteil in zwei untere trichterförmige Teile unterteilt ist. In den unteren Bereichen der trichterförmigen Teile sind Dosierelemente angeordnet, die von den Elektromotoren 55 und den Untersetzungsgetrieben 56 angetrieben werden. Unter dem dachförmigen Mittelteil ist die Antriebswelle 86 angeordnet, die nach hinten aus der Wand 87 der Maschine herausgeführt ist. Diese Antriebswelle 86 wird auf ihrer Vorderseite mit einer Gelenkwelle verbunden, so daß die Antriebswelle 86 über die Gelenkwelle von der Schlepperzapfwelle angetrieben werden kann. Auf der Rückseite der Antriebswelle 86 ist die Riemenscheibe 88 angeordnet, von der aus über den Keilriemen 89 und der Riemenscheibe 90, die auf der Gebläseantriebswelle 91 angeordnet ist, die Gebläseantriebswelle 91 und somit das Gebläse des Pneumatikdüngerstreuers angetrieben werden. Weiterhin ist auf der Rückseite der Wand 87 der Drehstromgenerator 92, der auf Kostengründenvorzugsweise auf dem Großserienbau eine PKW- oder LKW-Lichtmaschine ist, angeordnet, der über die Riemenscheibe 93 von dem Keilriemen 89 angetrieben wird. Dieser Drehstromgenerator 92 speist Strom in ein bordeigenes Stromnetz 94 des Pneumatikdüngerstreuers ein, so daß in dem von dem Drehstromgenerator 93 erzeugten Strom die Elektromotore 55 angetrieben werden können. Des weiteren weist dieses Stromnetz 94 noch den Stromspeicher, der als Akkumulator 95 ausgebildet ist, auf. Die Elektromotoren 55, die vorzugsweise als Gleichstrommotore ausgebildet sich, werden über eine Regelung bzw. Streuerung in ihrer Drehzahl geregelt. Diese Regelung ist im einzelnen in den Fig. 23 und 24 anhand der Blockdiagramme dargestellt, an denen auch die Regelung der Elektromotore weiter unten allgemein erläutert wird.

Die Elektromotore 55 sind, wie in den Ausführungsbeispielen nicht dargestellt ist, so angeordnet, daß sie von den Dosierwellen der Dosierelemente leicht abzukuppeln sind. Dieses ist erforderlich, damit die austauschbar angeordneten Dosierelemente leicht gegen andere Dosierelemente ausgetauscht werden können.

Die Fig. 23 zeigt als Blockdiagramm den Antrieb und die Regelung der die Dosierelemente 51, 66, 67, 72, 73, 78 bzw. 79 antreibenden Elektromotore 55. Der Übersichtlichkeithalber ist nur die Ziffer 51 in das Blockdiagramm eingetragen. Die für den Antrieb und die Regelung vorgesehenen Elemente sind innerhalb des mit gestrichelten Linien dargestellten Bereiches dargestellt. Die Stromversorgung erfolgt von dem Stromnetz 96 de s Schleppers, wobei diese Stromverbindung über einen Stecker hergestellt wird. Die Steuerung bzw. Regelung der Drehzahl der Antriebsmotore erfolgt über die Potentiometer 97 und über die Auswerteschaltung 98. Zur Erfassung der Drehzahl der Dosierelemente 51 bzw. der Dosierwelle sind die Sensoren 99 vorgesehen, die entsprechende Signale an die Auswerteschaltung 98 übermitteln. Weiterhin ist die Auswerteschaltung 98 über eine Leitung jeweils mit den Potentiometern 97 verbunden, so daß deren Stellung von der Auswerteschaltung 98 geregelt bzw. gesteuert wird. Mit der Auswerteschaltung 98 ist ein auf dem Schlepper angeordneter Anzeige- und Eingabemonitor 100 verbunden.

Der Antrieb und die Regelung der Ausbringmenge des Pneumatikdüngerstreuers erfolgt folgendermaßen:

Durch das Schlepperstromnetz 96 wird die elektrische Schaltung mit den Elektromotoren 55, den Sensoren 99, den Potentiometern 97, der Auswerteschaltung 98 sowie des Anzeige und Bedienungsmonitors 100 mit elektrischer Spannung versorgt.

Über den Bedienungsmonitor 100 wird eine Solldrehzahl der Elektromotore 55 und somit auch die Solldrehzahl der Dosierelemente 51 vorgegeben, die proportional der Ausbringmenge des Pneumatikdüngerstreuers pro Flächeneinheit ist. Dieser Wert kann entweder über eine Abdrehprobe ermittelt oder aus Streutabellen entnommen werden. Dieser Sollwert wird über den Bedienungsmonitor 100 in die Auswerteschaltung 98 eingespeichert. Die Drehzahl der Dosierelemente 51 wird durch die Sensoren 99 überwacht. Der jeweilige Istwert der durch die von den Sensoren an die Auswerteschaltung übermittelten Signale ermittelt wird, wird auf einem Anzeigefeld des Bedienungsmonitors 100 angezeigt.

Am Anfang des Feldes zu Beginn der Überfahrt werden über den Bedienungsmonitor 100 die Elektromotore 55 eingeschaltet, so daß die Dosierelemente 51 in Drehung versetzt werden, so daß sie Material ausbringen können. Die Drehzahl der Elektromotore 55 wird durch die Potentiometer 97 bestimmt, deren Einstellung jeweils von der Auswerteschaltung 98 und die über die über den Bedienungsmonitor eingegebenen Sollwerte bestimmt wird. Über den Bedienungsmonitor 100 kann vorgegeben werden, daß die Elektormotore 55 mit gleichen Antriebsdrehzahlen arbeiten, so daß ein Synchronlauf der beiden Elektromotore 55 erreicht wird. Weiterhin können über den Bedienungsmonitor 100 unterschiedliche Drehzahlen für die Elektromotore 55 und somit für die Dosierelemente 51 eingestellt werden, so daß in Abschnitten der Streubreite unterschiedliche Mengen von Material ausgebracht werden. Des weiteren können über den Anzeigemonitor 100 und der Auswerteschaltung 98 die Elektromotore gemeinsam ein- und ausgeschaltet sowie auch jeweils unabhängig bzw. getrennt voneinander ein- und ausgeschaltet werden.

Somit sind also die Elektromotore 55, die die Dosierelemente 51 und die im einzelnen nicht aufgelistete Dosierelemente in den anderen Figuren antreiben, so in ihrer Antriebsdrehzahl vom Schleppersitz aus über den Anzeigemonitor 100 und der Auswerteschaltung 98 derart regelbar, daß sowohl ein Synchronlauf der Elektromotore 55 mit gleichen Antriebsdrehzahlen als auch unterschiedlichen Drehzahlen für die Elektromotore einstellbar sind und weiterhin sind die Elektromotore 55 gleichzeitig und unabhänig voneinander stillsetzbar, sowie einschaltbar.

Über den Anzeigemonitor 100 läßt sich die Drehzahl der Elektromotore 55 bzw. der Dosierelemente 51 nachregeln, da über die Sensoren 99 die jeweilige Istdrehzahl an die Auswerteschaltung 98 übermittelt wird, die dann den jeweiligen Wert auf dem Anzeigemonitor 100 zur Anzeige bringt. Hierbei ist dann auf dem Anzeigemonitor 100 eine für jeden Motor bzw. jede Dosierelementengruppen 51 eigene Anzeige vorgesehen. Des weiteren weist die Auswerteschaltung 98 eine Überwachungseinrichtung auf, die dafür sorgt, daß auf dem Anzeigemonitor 100 der Stillstand der Dosierelemente 51 bzw. der Elektromotore 55 sowie die Drehbewegung der Elektromotore 55 bzw. der Dosierelemen te 51 anzeigt. Des weiteren können die Dosierelemente 51 bzw. die Elektromotore 55 wahlweise in beiden Drehrichtungen angetrieben werden. Hierzu ist vor dem Potentiometer 97 ein Umschaltrelais 100a zum Umpolen vorgesehen. So ist es beispielsweise vorgesehen, daß grundsätzlich, wenn die Elektromotore 55 aus dem Stillstand eingeschaltet werden, die Elektromotore zunächst eine kurzzeitige Rückwärtsdrehung machen, die der Förderrichtung entgegengesetzt ist, bevor der Elektromotor 55 die Dosierelement 51 in ihrer Förderrichtung antriebt. Hierbei kann dieses kurzzeitige Rückwärtslaufen über einen separaten Schalter auf dem Anzeigemonitor 100 erfolgen, bzw. kann in der Auswerteschaltung 98 eine Schaltung vorgesehen sein, so daß der kurzzeitige Rückwärtslauf der Elektromotore 55 bzw. der Dosierelemente 51 automatisch beim Einschalten der die Dosierelemente 51 antreibenden Elektromotore erfolgt. Darüber hinaus kann zusätzlich zu der in der Auswerteschaltung automatischen Schaltung für den kurzzeitigen Rückwärtslauf gleichzeitig noch ein Handschalter auf dem Bedienungsmonitor 100 vorgesehen sein, über den zusätzlich auch während des Betriebes bzw. des Ausbringvorganges von Material die Elektromotore 55 auf Rückwärtslauf geschaltet werden. Dieses ist dann wichtig, wenn die durch Blockieren der Dosierelemente 51 durch Fremdkörper die Dosierwalzen bzw. die Elektromotore 55 zum Stillstand kommen.

Des weiteren werden die Elektromotore 55 jeweils nicht gemeinsam gleichzeitig eingeschaltet, sondern kurzfristig verzögert nacheinander eingeschaltet, so daß von dem Stromerzeuger bzw. dem Stromnetz nicht die Summe der Anzugsströme aller Elektromotore aufgebracht werden muß. Hierbei dann das kurzfristige nacheinander Einschalten der Elektromotore von Hand bzw. über eine in der Auswerteschaltung vorgesehene Verzögerungsschaltung automatisch erfolgen. Dieses kurzfristige nacheinander Einschalten der Elektromotore braucht nur so kurzfristig verzögert zu werden, daß sie praktisch subjektiv nicht wahrgenommen wird.

Damit die gewünschte Menge Material pro Flächeneinheit ausgebracht wird, ist es erforderlich, daß der Pneumatikdüngerstreuer mit einer vorher gewählten konstanten Fahrgeschwindigkeit über die zu bestreuende Bodenoberfläche bewegt wird. Diese gewählte Fahrgeschwindigkeit wird bei der Eingabe des Sollwertes mit berücksichtigt.

Es ist jedoch auch möglich, daß zusätzlich noch ein Fahrgeschwindigkeitssensor 101, der beispielsweise an an eines der Vorderräder eines den Pneumatikdüngersteuer ziehenden Schleppers 102 angebracht ist, die jeweils tatsächliche Fahrgeschwindigkeit an die Auswerteschaltung 98 übermittelt. Somit ist es dann möglich, daß dann automatisch über die Auswerteschaltung 98 in Verbindung mit den Potentiometern 97 auch bei sich ändernder Fahrgeschwindigkeit der jeweilige Istwert der Ausbringmenge konstant gehalten wird, indem über die Potentiometer 90 und die Auswerteschaltung 98 sowie dem Sensor 101, der die aktuelle Fahrgeschwindigkeit an die Auswerteschaltung 98 übermittelt, die Elektromotore 55 und somit die Drehzahl der Dosierelemente 51 entsprechend geregelt wird.

Im folgenden soll anhand eines praktischen Ausbringbeispieles von Material die Regelung beschrieben werden.

Während des Ausbringvorganges von Material mit dem Pneumatikstreuer auf dem Feld, wird der Dünger aus dem Vorratsbehälter über die Dosierelemente 51 in regelbaren Mengen den Rohrleitungen 54 zugeführt. In den Rohrleitungen wird das Material von dem von einem Gebläse erzeugten Luftstrom erfaßt und zu dem in unterschiedlichen Abständen quer zur Fahrtrichtung gesehen nebeneinander angeordneten Ausströmöffnungen geblasen. Im Normalfall wird allen Rohrleitungen des Pneumatikdüngerstreuers über die Dosierelemente 51 die gleiche Menge Material zugeführt, so daß über die gesamte Streubreite der Dünger in einer gleichmäßigen Streustärke ausgebracht wird. Soll nun beispielsweise auf der rechten Seite der Arbeitsbreite über die halbe Arbeitsbreite die St reustärke reduziert werden, während auf der linken Seite der Arbeitsbreite die Grundstreustärke beibehalten werden soll, so wird über den Bedienungsmonitor 100 für den der rechten Seite zugeordneten Elektromotor 55 über die Auswerteschaltung 98 und den Potentiometer 97 eine kleinere Drehzahl für den Elektromotor 55 bzw. die Dosierelemente 51 eingestellt, so daß eine kleinere Menge Material der rechten Seite der Rohrleitungen zugeführt wird, so daß auf der rechten Seite der Arbeitsbreite das Material in einer geringeren Streustärke ausgebracht wird. Die Dosierelemente 51 werden somit über den Elektromotor 55 mit einer geringeren Drehzahl als die Dosierelemente auf der linken Seite von dem Elektromotor 55 angetrieben. Hierbei kann die entsprechende Schaltung in der Auswerteschaltung 98 so ausgelegt sein, daß sich der Ausbringmengenwert kontinuierlich und langsam oder aber auch schlagartig ändert. Wenn der Bereich, in dem auf der einen Seite eine geringere Menge Dünger ausgebracht werden soll, überfahren worden ist, bzw. man sich einer Fläche nähert, wo wieder der Grundausbringmengenwert entsprechend der Grunstreustärke ausgebracht werden soll, so wird wiederum über die Bedienungsmonitors 100 und der Auswerteschaltung 98 und dem Potentiometer 97 die Grunddrehzahl für den Grundausbringmengenwert an dem der rechten Seite der Dosierelemente 51 zugeordneten Elektromotor eingestellt, so daß wieder die Grundausbringmenge ausgebracht wird.

Wenn nun während der Fahrt auf der linken Seite der Arbeitsbreite über die halbe Arbeitsbreite aufgrund der zu geringen Nährstoffversorgung mehr Dünger entsprechend der größeren Streustärke gegenüber der Grundausbringstreustärke auf der rechten Seite der Arbeitsbreite aufgebracht werden soll, wo wird über den Bedienungsmonitor 100 ein größerer Sollwert in die Auswerteschaltung 98 eingegeben. Die Auswerteschaltung 91 übermittelt dann entsprechende Signale an den der linken Seite des Pneumatikdüngerstreuers zugeordneten Potentiometer entsprechende Signale, so daß der Potentiometer verstellt wird, so daß dann über den der rechten Seite der Dosierelemente 51 zugeordneten Elektromotor 55 die Dosierelemente 51 mit einer größeren Drehzahl angetrieben werden, so daß eine größere Menge Material pro Flächeneinheit nur über den rechten Abschnitt der Streubreite ausgebracht wird. Wenn nun der Streifen mit der gringeren Nährstoffversorgung zu Ende ist, wird wiederum vom Schleppersitz aus über den Bedienungsmonitor 100 und der Auswerteschaltung 98 der Potentiometer 97 zurückgeregelt, so daß der Elektromotor 55 die Dosierelemente auf der linken Seite des Pneumatikdüngerstreuers wieder mit einer Drehzahl antreibt, die der Grunddrehzahl, die proportional der Grundausbringmenge ist. Somit wird also wieder über die gesamte Arbeitsbeite des Pneumatikdüngerstreuers der Grundausbringmengenwert ausgebracht.

Wenn nun die Arbeitsbreite in sich spitz zulaufenden Randbereichen des Feldes verringert, wird über den Bedienungsmonitor 100 und der Auswerteschaltung 98 der entsprechende Elektromotor, der die Dosierelemente auf der Seite antreibt, auf der sich die Arbeitsbreite verringert und auf der der Düngerstreuer über den Feldrand hinaus streuen würden, abgeschaltet, so daß die Dosierelemente zum Stillstand kommen. Andererseits ist es jedoch auch möglich, wenn beispielsweise am Feldrand angefangen wird zu streuen, wo nur beispielsweise die halbe Arbeitbreite des Düngerstreuers zunächst nur zum Bestreuen des Feldrandstreifens benötigt wird, zunächst nur den einen der beiden Elektromotore einzuschalten. Wenn dann sich die Arbeitsbreite aufgrund des sich erweiternden Feldrandstreifens vergrößert, wird dann über den Bedienungsmonitor 100 und der Auswerteschaltung 98 der andere Elektromotor 55 zugeschaltet, so daß sämtliche Dosierelemente des Pneumatikdüngerstreuers angetrieben werden, so daß über die gesamte Arbeitsbreite des Pneumatikdüngerstreuers der Dünger ausgebracht wird.

Es wird ausdrücklich betont, daß sich die Erfindung nicht auf ein Ausführungsbeisp iel mit zwei Elektromotore 55 beschränkt, sondern daß genausogut drei vier und mehr Elektromotore vorgesehen sein können. Hierbei ist es dann lediglich erforderlich, daß die entsprechenden Bauteile entsprechend mehrfach vorhanden sind bzw. die Auswerteschaltung 98 entsprechend erweitert wird.

Die Fig. 24 zeigt in einem Blockdiagramm den Aufbau einer anderen Regelung und Steuerung für den Antrieb der Elektromotore 55, die die Dosierelemente 51, 66, 67, 72, 73, 78 bzw. 79 antreiben, wobei der Übersichtlichkeit halber in das Blockdiagramm gemäß Fig. 12, nur die Ziffer 51 eingetragen ist. Des weiteren weist diese Steuerung bzw. Regelung die Sensoren 103 zur Erfassung der Drehzahl der Dosierelemente 51 auf, wobei die Drehzahl der Dosierelemente 51 proportional der Ausbringmenge an Material pro Flächeneinheit ist. Weiterhin weist diese Schaltung die Gleichstromsteller 104 für die Regelung der Antriebsdrehzahl der Elektromotore 55 auf. Des weiteren ist in dieser Regelung eine Auswerteschaltung 105 angeordnet, die die Steuerlogik und die Antriebsregelung aufweist. Über den Anzeige-und Bedienungsmonitor 106 werden in die Auswerteschaltung 105 die jeweiligen Sollwerte bzw. Standardgrößen der Maschine eingegeben. Außerdem weist die Regelung noch den Sensor 107 auf, der die tatsächliche Fahrgeschwindigkeit mit der die Verteilmaschine über die Bodenoberfläche während des Ausbringvorganges bewegt wird, an die Auswerteschaltung 105 übermittelt. In den mit gestrichelten Linien angedeuteten Bereich sind die für die Regelung und Steuerung entscheidenden Bauteile für die Ausbringmengenregelung eingezeichnet. Die in diesem gestrichelten Bereich angeordneten Bauteile werden von einem Stromerzeuger bzw. Stromerzeugungsnetz mit Spannung versorgt. In dem hier eingezeichneten Beispielsfall ist auf der Verteilmaschine selbst der Drehstromgenerator 108 mit einem Gleichrichter angeordnet. Weiterhin weist das bordeigene Stromnetz den als Energiespeicher ausgebildeten Akkumulator 109 auf. Der Drehstromgenerator 108 wird über einen Antrieb beispielsweise von der Gebläsewelle der Verteilmaschine von der Schlepperzapfwelle des die Verteilmaschine ziehenden Schleppers angetrieben. Es ist jedoch auch möglich, daß die innerhalb des gestrichelten Bereiches angeordneten Bauteile der Regelung und Steuerung von dem Bordnetz des Schleppers der die Verteilmaschine zieht, versorgt wird.

Über den Bedienungs- und Eingabemonitor 106 wird die Sollausbringmenge bzw. die Solldrehzahl der Dosierelemente 51 in die Auswerteschaltung 105 eingespeichert. Diese Sollwerte werden entweder über eine Abdrehprobe ermittelt oder aber aus Streutabellen entnommen.

Am Anfang einer Überfahrt über das Feld um Material auszubringen, wird über den Bedienungsmonitor 106 ein Signal an die Auswerteschaltung 105 gegeben, daß die Elektromotore 55 die Dosierelemente 51 antreiben, eingeschaltet werden, so daß Material ausgebracht wird. Weiterhin kann die Auswerteschaltung 105 eine derartige Steuerschaltung bzw. Logik aufweisen, daß beim Einschalten der Elektromotore 55 die Elektromotore zunächst kurzfristig eine Rückwärtsdrehung machen und erst dann auf Vorwärtslauf umschalten, um so dann die Dosierräder 51 in Förderrichtung anzutreiben. Hierdurch wird erreicht, daß das Material, welches sich evtl. aufgrund einer längeren Transportfahrt verfestigt hat direkt vor den Dosierorganen aufgelockert wird, so daß für den Antrieb der Dosierräder in Förderrichtung ein wesentlich geringeres Anlaufmoment von den Elektromotoren 55 aufgebracht werden muß, als wenn die Elektromotore 55 die Dosierelemente 51 sofort in Förderrichtung antreiben würden. Zusätzlich kann der Bedienungsmonitor 106 Tasten aufweisen, über die auch während der Fahrt bzw. während des Ausbringvorganges die Dosierelemente 51 kurzfristig über die Elektromotore 55 rückwärts angetrieben werden. Dieses ist beispielsweise von großer Bedeutung, um ein selbständiges und vom Schleppersitz aus gesteuertes Freiarbeiten der Dosierelemente zu erreichen, wenn diese zum Stillstand gelangt sind, wenn beispielsweise sich größere Klumpen zusammengebackenen Materiales vor die Dosierelemente gesetzt haben und die Dosierelemente und somit auch die Elektromotore 55 blockieren. Durch kurzzeitiges Rückwärtslaufen der Dosierelemente wird diese Störung in einfacher Weise direkt vom Schleppersitz aus beseitigt.

Des weiteren können die Elektromotore 55 zwei Drehzahlstufen auf, die über zwei Anzapfungen der Ankerwickung des Motors realisiert sein können so daß die Elektromotore 55 bei großen Ausbringmengen und bei kleinen Ausbringmenge jeweils in dem gewünschten Drehzahlbereich mit optimalem Antriebsmoment arbeiten können. Die jeweilige Drehzahlstufe wird durch Umschalten des Umschalters 110, der mit der Auswerteschaltung 105 gekoppelt, bewirkt. Hierdurch spart man auch eine Untersetzungsstufe eines Untersetzungsgetriebes ein.

Über die Auswerteschaltung 105 wird erreicht, daß aufgrund der von den Sensoren 103, die die jeweilige tatsächliche Drehzahl, die der Ausbringmenge proportional ist, an die Auswerteschaltung übermitteln und durch die von dem Sensor 107 übermittelten Fahrgeschwindigkeit die jeweils gewünschte Sollausbringmenge eingehalten wird, die über den Bedienungsmonitor 106 jeweils der Auswerteschaltung 105 vorgegeben wird.

Über den Bedienungsmonitor 106 lassen sich alle Elektromotore 55 gleichzeitig ein- und ausschalten bzw. auch jeweils nur einer oder mehrere unabhängig voneinander stillsetzen bzw. einschalten, so daß durch das getrennte Ein- und Ausschalten der Elektromotore 55 und somit das Stillsetzen der Dosierelemente 51 die Arbeitsbreite der Verteilmaschine sich in Abschnitten reduzieren läßt. Des weiteren kann über den Bedienungsmonitor 106 der Auswertschaltung 105 vorgegeben werden, daß die Elektromotore 55 mit gleichen Antriebsdrehzahlen umlaufen, so daß die Dosierelement 51 die gleiche Ausbringmenge Material über die gesamte Streubreite der Verteilmaschine dosieren. Es ist also erforderlich für diesen Fall, daß die Auswerteschaltung 105 einen Synchronlauf der Elektromotore mit gleichen Antriebsdrehzahlen sichert. Auch ist es möglich, daß über den Bedienungsmonitor 106 der Auswerteschaltung 105 vorgegeben wird, daß die Elektromotore 55 und somit die Dosierelemente 51 mit unterschiedlichen Drehzahlen angetrieben werden, so daß unterschiedliche Mengen Material von den Dosierelementen 51 über verschiedene Abschnitte der Streubreite der Verteilmaschine dosiert werden, so daß abschnittsweise unterschiedliche Mengen Material ausgebracht werden. Hierbei ist es möglich, daß abschnittsweise mehr oder weniger Material ausgehend von einem Grundausbringmengenwert, der im wesentlichen über die gesamte zu bestreuende Fläche ausgebracht werden soll, während jedoch in mit Nährstoffen unterversorgten schmalen Streifen, die schmaler als die Streubreite der Verteilmaschine ist, mehr Dünger ausgebracht werden soll, während in Abschnitten, die schmaler als die Verteilmaschine sind, die mit Nährstoffen überversorgt sind, weniger Dünger in dem entsprechenden Abschnitt ausgebracht wird. Hierzu wird dann ein entsprechendes Signal über den Bedienungsmonitor 106 in die Auswerteschaltung 105 eingegeben, so daß dann der entsprechende Elektromotor 55, der die Dosierelemente 51 antreibt, die das Material in die Rohrleitung dosieren und das Material in den jeweiligen Streifen ausbringen, entsprechend geändert wird.

Der Akkumulator 109 ist so stark ausgelegt, daß die von dem Akkumulator 109 gelieferte Stromstärke ausreicht, um zum Zwecke der Abdrehprobe über die Elektromotre 55 die Dosierorgane antreiben zu können, wenn der Generator 108 nicht angetrieben wird. Dieses ist vor allem für eine Abdrehprobe von Mikrogranulat von Bedeutung, da der von dem Gebläse, dessen Welle den Generator antreibt, erzeugte Luftstrom die Abdrehprobe verfälschen würde.

**Patentansprüche**

1. Verteilmaschine, insbesondere Pneumatikdüngerstreuer, der einen mit Auslauföffnungen ausgestatteten Vorratsbehälter (1) und über eine Antriebsvorrichtung (8,9,29,39,40) angetriebene und in ihrer Drehzahl regelbare und in Gruppen aufgeteilte Dosierräder (2) zur Förderung des aus den Auslauföffnungen herausrieselnden Materiales in an zumindest ein Gebläse angeschlossene und mit Ausströmöffnungen, die jeweils nebeneinander quer zur Fahrtrichtung gesehen in einem Abstand jeweils zueinander angeordnet sind, versehene Rohrleitungen (6) aufweist, wobei die Streubreite des durch die durch den Auslauföffnungen herausströmenden und durch Aufblasen auf vor den Auslauföffnungen angeordneten Prallkörpern (7) erzeugten Streufächer ein Vielfaches der Breite des Vorratsbehältes (1) beträgt, wobei über die Antriebsvorrichtung (8,9,29,39,40) durch Veränderung der Drehzahl der regelbaren Dosierräder (2) die Ausbringmenge vom Schleppersitz aus während des Ausbringens von Material zu vergrößern bzw. zu verkleinern ist, dadurch gekennzeichnet, daß jedem Dosierrad oder jeder Gruppe von Dosierrädern eine eigene Antriebsvorrichtung (8, 9, 29, 39, 40) zugeordnet ist, so daß jedes Dosierrad oder jede Gruppe von Dosierrädern mit gleichen oder verschiedenen Drehzahlen unabhängig voneinander antreibbar ist.

2. Verteilmaschine nach Anspruch 1, dadurch gekennzeichnet, daß für jede Gruppe von Dosierrädern (2) ein eigener regelbarer Antrieb (8,9,29,39,40) vorgesehen ist.

3. Verteilmaschine nach Anspruch 1 oder 2, dadurch gekennzeichnet, daß für jede Gruppe von Dosierrädern ein eigener Antriebsmotor (39,40) vorgesehen ist.

4. Verteilmaschine nach Anspruch 1, dadurch gekennzeichnet, daß für jede Gruppe von Dosierrädern ein eigenes Regelgetriebe (39,40) vorgesehen ist.

5. Verteilmaschine nach Anspruch 1 oder 2, dadurch gekennzeichnet, daß ein Reibradgetriebe (29) mit zumindest Zwei Abtriebswellen (34) vorgesehen ist, wobei die Drehzahlen der Abtriebswellen (34) unabhängig voneinander regelbar sind und jede Abtriebswelle (34) einer Gruppe von Dosierrädern zugeordnet ist.

6. Verteilmaschine nach Anspruch 1 oder 2, dadurch gekennzeichnet, daß ein Regelgetriebe (47) oder ein regelbarer Antriebsmotor vorgesehen ist, und daß zusätzlich die Dosierräder als axial verschiebbare Schubräder (44) ausgebildet sind.

7. Verteilmaschine nach Anspruch 3, dadurch gekennzeichnet, daß die Antriebsmotore als Ölmotore (39,40) ausgebildet sind, und daß für die Regelung der Ölmotoren zusätzlich zu den Regelventilen ein einstellbares Stromteilerventil (42) vorgesehen ist.

8. Verteilmaschine nach Anspruch 1 oder 2, dadurch gekennzeichnet, daß ein Regelgetriebe (8,9) oder ein regelbarer Antriebsmotor vorgesehen ist, und daß zusätzlich für die Gruppen (20,23) von Dosierrädern (2) ein zumindest drei Stufen aufweisendes Schaltgetriebe (18,19) vorgesehen ist.

9. Verteilmaschine nach Anspruch 1, dadurch gekennzeichnet, daß zumindest zwei regelbare Elektromotore (55) für den Antrieb der Dosierwalzengruppen (51,66,67,72,73,78,79) vorgesehen sind, die über eine auf dem die Verteilmaschine ziehenden Schlepper angeordnete Regeleinrichtung (98,100,105,106) derart vom Schleppersitz aus regelbar sind, daß sowohl ein Synchronlauf der Elektromotore (55) mit gleichen Antriebsdrehzahlen als auch unterschiedliche Drehzahlen für die Elektromotore (55) einstellbar sind, und daß die Elektromotore (55) gleichzeitig und unabhängig voneinander stillsetzbar sowie einschaltbar sind

10. Verteilmaschine nach Anspruch 9, dadurch gekennzeichnet, daß die Elektromotore (55) ein Untersetzungsgetriebe (56,63) aufweisen.

11. Verteilmaschine nach Anspruch 9, dadurch gekennzeichnet, daß die Elektromotore (55) zwei Drehzahlbereiche aufweisen.

12. Verteilmaschine nach Anspruch 9, dadurch gekennzeichnet, daß an den Abtriebswellen der Elektromotore (55) bzw. an den Dosierwellen (52,69,70,75,76,80) Sensoren (99,103) zur Erfassung der Drehzahl der Dosierwellen (52,69,70,75,76,80) bzw. der Abtriebswellen angeordnet sind.

13. Verteilmaschine nach Anspruch 12, dadurch gekennzeichnet, daß die Sensoren (99,103) Signale erzeugen, die auf dem Schlepper auf einem Monitor (100,106) angezeigt werden.

14. Verteilmaschine nach Anspruch 12, dadurch gekennzeichnet, daß vorzugsweise für jeden Motor eine repräsentative Anzeige vorgesehen ist.

15. Verteilmaschine nach Anspruch 9, dadurch gekennzeichnet, daß zur Regelung der Drehzahl der Elektromotore (55) Potentiometer (97) vorgesehen sind.

16. Verteilmaschine nach Anspruch 9, dadurch gekennzeichnet, daß zur Regelung der Drehzahl der Elektromotore (55) zumindest jeweils ein Gleichstromsteller (104) vorgesehen ist.

17. Verteilmaschine nach Anspruch 9, dadurch gekennzeichnet, daß auf der Verteilmaschine zumindest ein Generator (108) angeordnet ist, der vorzugsweise über die Gebläsewelle (91) von der Schlepperzapfwelle angetrieben wird.

18. Verteilmaschine nach Anspruch 17, dadurch gekennzeichnet, daß der Generator als Drehstromgenerator (108) ausgebildet ist, dem zumindest ein Gleichrichter nachgeschaltet ist, so daß Gleichstrommotore (55) gespeist werden können.

19. Verteilmaschine nach Anspruch 17, dadurch gekennzeichnet, daß die Drehstromgeneratoren (108) vorzugsweise aus Großserien, beispielsweise aus PKW-Großserien stammen.

20. Verteilmaschine nach Anspruch 17, dadurch gekennzeichnet, daß der Generator (108) Strom in ein bordeigenes Stromnetz der Verteilmaschine einspeist, mit dem die Elektromotore (55) angetrieben werden, und daß in dem Stromnetz ein Energiespeicher (109) angeordnet ist.

21. Verteilmaschine nach Anspruch 20, dadurch gekennzeichnet, daß der Energiespeicher der Akkumulator des Schleppers ist.

22. Verteilmaschine nach Anspruch 20, dadurch gekennzeichnet, daß der Energiespeicher ein auf der Verteilmaschine installierter Akkumulator (109) ist.

23. Verteilmaschine nach Anspruch 9 und 20, dadurch gekennzeichnet, daß der Akkumulator (109) so stark ausgelegt ist, daß die von dem Akkumulator (109) gelieferte Stromstärke ausreicht um zum Zwecke der Abdrehprobe die die Dosierorgane antreibenden Elektromotore (55) antreiben zu können, wenn der Generator (108) nicht angetrieben wird.

24. Verteilmaschine nach Anspruch 9, dadurch gekennzeichnet, daß die Elektromotore (55) von dem Strom der Lichtmaschine des Schleppers antreibbar sind.

25. Verteilmaschine nach Anspruch 9, dadurch gekennzeichnet, daß zumindest zwei Elektromotore (55) und zusätzlich jeweils eine Kupplung vorgesehen ist, die die Gruppen von Dosierorganen unterteilt.

26. Verteilmaschine nach Anspruch 9, dadurch gekennzeichnet, daß mindestens vier Elektromotore (55) vorgesehen sind, die separat schalt- und regelbar sind.

27. Verteilmaschine nach Anspruch 9, dadurch gekennzeichnet, daß eine Überwachungseinrichtung vorgesehen ist, die die Drehbewegung der Dosierorgane bzw. den Stillstand der Dosierorgane anzeigt.

28. Verteilmaschine nach Anspruch 9, dadurch gekennzeichnet, daß eine Vorrichtung vorgesehen ist, mit der die Dosierorgane mittels Handkraft drehbar sind.

29. Verteilmaschine nach Anspruch 9, dadurch gekennzeichnet, daß die Elektromotore (55) wahlweise in beiden Drehrichtungen antreibbar sind.

30. Verteilmaschine nach Anspruch 9, dadurch gekennzeichnet, daß beim Einschalten des Elektromotores (55) zunächst eine kurzzeitige Rückwärtsdrehung gemacht wird, bevor der Elektromotor (55) die Dosierwalzen (51,66,67,72,73,78,79) in ihrer Förderrichtung antreibt.

31. Verteilmaschine nach Anspruch 9, dadurch gekennzeichnet, daß der kurzzeitige Rückwärtslauf automatisch beim Einschalten der die Dosierorgane (51,66,67,72,73,78,79) antreibenden Elektromotore (55) erfolgt.

32. Verteilmaschine nach Anspruch 9, dadurch gekennzeichnet, daß ein Handschalter vorgesehen ist, mit dem der Rückwärtslauf für die die Elektromotore (55) antreibenden Dosierorgane einschaltbar ist.

33. Verteilmaschine nach Anspruch 9, dadurch gekennzeichnet, daß die Dosierwalzen (51) zumindest gruppenweise elastisch ausweichbar angeordnet sind, so daß bei Überlastmomenten die Dosierwalze (51) ausweichen und anschließend wieder in ihre Ursprungsstellung zurückgedrängt wird.

34. Verteilmaschine nach Anspruch 9, dadurch gekennzeichnet, daß die Elektromotore (55) zumindest ein einstufiges Untersetzungsgetriebe (56,63) aufweisen.

35. Verteilmaschine nach Anspruch 34, dadurch gekennzeichnet, daß der Elektromotor (55) bzw. das Untersetzungsgetriebe (56,63) einen doppelseitigen Abtrieb aufweist.

36. Verteilmaschine nach Anspruch 35, dadurch gekennzeichnet, daß das Untersetzungsgetriebe (56) eine Hohlwelle aufweist.

37. Verteilmaschine nach Anspruch 35, dadurch gekennzeichnet, daß das Untersetzungsgetriebe (63 ) zwei Ausgangswellen aufweist.

38. Verteilmaschine nach Anspruch 35, dadurch gekennzeichnet, daß das Untersetzungsgetriebe (56,63) als Schneckengetriebe ausgebildet ist.

39. Verteilmaschine nach Anspruch 35, dadurch gekennzeichnet, daß das Untersetzungsgetriebe als Planetengetriebe ausgebildet ist.

40. Verteilmaschine nach Anspruch 9, dadurch gekennzeichnet, daß die Motore (55) derart eingeschaltet werden, daß sie jeweils kurzfristig verzögert nacheinander eingeschaltet werden.

41. Verteilmaschine nach Anspruch 40, dadurch gekennzeichnet, daß die Verzögerung so kurzfristig ist, daß sie praktisch nicht wahrnehmbar ist und subjektiv so wahrgenommen wird, als ob alle Motore (55) gleichzeitig eingeschaltet werden.

42. Verteilmaschine nach Anspruch 40, dadurch gekennzeichnet, daß die Motore (55) automatisch kurzfristig nacheinander eingeschaltet werden.

43. Verteilmaschine nach Anspruch 40, dadurch gekennzeichnet, daß die Motore (55) von Hand nacheinander eingeschaltet werden.

44. Verteilmaschine nach Anspruch 9, dadurch gekennzeichnet, daß die Dosierräder leicht aus- und einbaubar angeordnet sind.

45. Verteilmaschine nach Anspruch 44, dadurch gekennzeichnet, daß die Motore (55) leicht ein- und ausbaubar angeordnet sind.

46. Verteilmaschine nach Anspruch 44, dadurch gekennzeichnet, daß die Motore (55) leicht von den Dosierrädern bzw. den Antriebswellen abkuppelbar und leicht wieder ankuppelbar sind.

47. Verteilmaschine nach Anspruch 44, dadurch gekennzeichnet, daß die Motore (55) seitlich verschiebbar bzw. verschwenkbar angeordnet sind.

48. Verteilmaschine nach Anspruch 9, dadurch gekennzeichnet, daß die Dosierräder (78,79) auf einer Welle (80) frei drehbar gelagert sind, daß die Welle (80) Kupplungen (81,82) aufweist, die jeweils mit Kupplungen (81,82) der Dosierräder (78,79) kuppelbar sind, daß die Welle (80) verschiebbar gelagert ist und daß durch Verschieben der Welle (80) nebeneinander die Dosierräder (78,79) über die Kupplungen (81,82) mit der Welle (80) kuppelbar sind.

## Claims

1. Distributor, especially a pneumatic fertilizer spreader, which includes a hopper (1), provided with outlet apertures, and metering wheels (2) for conveying the material, which emerges from the outlet apertures, into pipelines, which communicate with at least one blower and are provided with outlet apertures which, when viewed transversely relative to the direction of travel, are disposed alongside one another with spacings therebetween, said metering wheels being driven by a driving means (8, 9, 29, 39, 40), they are controllable in respect of their speed and are divided into groups, the dispersion width of the dispersion jet of material dispersed through the outlet apertures and increased by material being blown onto deflecting members (7), which are disposed in front of the outlet apertures, amounting to a multiple of the width of the hopper (1), the output quantity being able to be increased or reduced from the tractor seat during the distribution of material through the intermediary of the driving means (8, 9, 29, 39, 40) by changing the speed of the controllable metering wheels (2), characterised in that each metering wheel or each group of metering wheels has its own driving means (8, 9, 29, 39, 40) associated therewith, so that each metering wheel or each group of metering wheels is drivable independently of each other at identical or different speeds.

2. Distributor according to claim 1, characterised in that one particular controllable driving means (8, 9, 29, 39, 40) is provided for each group of metering wheels (2).

3. Distributor according to claim 1 or 2, characterised in that one particular driving motor (39, 40) is provided for each group of metering wheels.

4. Distributor according to claim 1, characterised in that one particular variable speed transmission unit (39, 40) is provided for each group of metering wheels.

5. Distributor according to claim 1 or 2, characterised in that one friction gear (29) with at least two output shafts (34) is provided, the speeds of the output shafts (34) being controllable independently of each other, and each output shaft (34) is associated with one group of metering wheels.

6. Distributor according to claim 1 or 2, characterised in that one variable speed transmission unit (47) or one controllable driving motor is provided, and in that the metering wheels are additionally formed as axially displaceable sliding wheels (44).

7. Distributor according to claim 3, characterised in that the driving motors are hydraulic motors (39, 40), and in that, in addition to the control valves, an adjustable flow-dividing valve (42) is provided for the control of the hydraulic motors.

8. Distributor according to claim 1 or 2, characterised in that one variable speed transmission unit (8, 9) or one controllable driving motor is provided, and in that one change-over gear (18, 19), having at least three steps, is additionally provided for the groups (20, 23) of metering wheels (2).

9. Distributor according to claim 1, characterised in that at least two controllable electric motors (55) are provided for driving the groups of metering rollers (51, 66, 67, 72, 73, 78, 79) which, through the intermediary of a regulator (98, 100, 105, 106), which is disposed on the tractor towing the distributor, are controllable from the tractor seat in such a manner that both a synchronous operation of the electric motors (55) at identical driving speeds and different speeds for the electric motors (55) are selectable, and in that the electric motors (55) can be stopped and switched-on simultaneously and independently of each other.

10. Distributor according to claim 9, characterised in that the electric motors (55) have a reduction gear (56, 63).

11. Distributor according to claim 9, characterised in that the electric motors (55) have two speed ranges.

12. Distributor according to claim 9, characterised in that sensors (99, 103) for detecting the speed of the metering shafts (52, 69, 70, 75, 76, 80) or of the output shafts are disposed on the output shafts of the electric motors (55) or respectively on the metering shafts (52, 69, 70, 75, 76, 80).

13. Distributor according to claim 12, characterised in that the sensors (99, 103) produce signals which are indicated on the tractor on a monitor (100, 106).

14. Distributor according to claim 12, characterised in that one representative display is preferably provided for each motor.

15. Distributor according to claim 9, characterised in that potentiometers (97) are provided to control the speed of the electric motors (55).

16. Distributor according to claim 9, characterised in that at least one particular direct-current control unit (104) is provided to control the speed of each of the electric motors (55).

17. Distributor according to claim 9, characterised in that at least one generator (108) is disposed on the distributor, which generator is preferably driven by the power take-off shaft of the tractor through the intermediary of the blower shaft (91).

18. Distributor according to claim 17, characterised in that the generator is a three-phase generator (108), which has at least one rectifier subsequently added, so that direct-current motors (55) can be actuated.

19. Distributor according to claim 17, characterised in that the three-phase generators (108) preferably originate from mass-production, for example from large-scale car production.

20. Distributor according to claim 17, characterised in that the generator (108) supplies current to a built-in electric circuit of the distributor, whereby the electric motors (55) are driven, and in that an energy storage unit (109) is disposed in the electric circuit.

21. Distributor according to claim 20, characterised in that the energy storage unit is the accumulator of the tractor.

22. Distributor according to claim 20, characterised in that the energy storage unit is an accumulator (109), which is installed on the distributor.

23. Distributor according to claims 9 and 20, characterised in that the accumulator (109) is so strong that the current intensity, supplied by the accumulator (109), is sufficient to be able to drive the electric motors (55), which drive the metering members, for the purpose of a turning test, when the generator (108) is not driven.

24. Distributor according to claim 9, characterised in that the electric motors (55) are drivable by the current of the electric generator of the tractor.

25. Distributor according to claim 9, characterised in that at least two electric motors (55) are provided, and one particular coupling is additionally provided which divides the respective groups of metering members.

26. Distributor according to claim 9, characterised in that at least four electric motors (55) are provided, which are switchable and controllable separately.

27. Distributor according to claim 9, characterised in that a monitoring means is provided, which indicates the rotational movement of the metering members or respectively the stationary state of the metering members.

28. Distributor according to claim 9, characterised in that a device is provided, whereby the metering members are manually rotatable.

29. Distributor according to claim 9, characterised in that the electric motors (55) are selectively drivable in both directions of rotation.

30. Distributor according to claim 9, characterised in that, when the electric motor (55) is switched-on, a brief reverse rotation is initially effected before the electric motor (55) drives the metering rollers (51, 66, 67, 72, 73, 78, 79) in their direction of conveyance.

31. Distributor according to claim 9, characterised in that the brief reverse running is automatically effected by the switching-on of the electric motors (55), which drive the metering members (51, 66, 67, 72, 73, 78, 79).

32. Distributor according to claim 9, characterised in that a manual switch is provided, which enables the switching-on of the reverse running for the metering members, which drive the electric motors (55).

33. Distributor according to claim 9, characterised in that the metering rollers (51) are disposed so as to be elastically resilient, at least in groups, so that, in the event of overloading moments, the metering roller (51) will yield and is subsequently returned to its original position.

34. Distributor according to claim 9, characterised in that the electric motors (55) have at least one single-step reduction gear (56, 63).

35. Distributor according to claim 34, characterised in that the electric motor (55) or respectively the reduction gear (56, 63) has a bilateral output.

36. Distributor according to claim 35, characterised in that the reduction gear (56) has a hollow shaft.

37. Distributor according to claim 35, characterised in that the reduction gear (63) has two output shafts.

38. Distributor according to claim 35, characterised in that the reduction gear (56, 63) is a worm gear.

39. Distributor according to claim 35, characterised in that the reduction gear is a planetary-type gear.

40. Distributor according to claim 9, characterised in that the motors (55) are switched-on in such a manner that they are each switched-on in sequence with a brief delay between each operation.

**41.** Distributor according to claim 40, characterised in that the delay is so brief that it is virtually unnoticeable and is visually noticed in that all of the motors (55) are simultaneously switched-on.

**42.** Distributor according to claim 40, characterised in that the motors (55) are automatically switched-on in succession briefly.

**43.** Distributor according to claim 40, characterised in that the motors (55) are manually switched-on in succession.

**44.** Distributor according to claim 9, characterised in that the metering wheels are disposed so as to be easily detachable and mountable.

**45.** Distributor according to claim 44, characterised in that the motors (55) are disposed so as to be easily mountable and detachable.

**46.** Distributor according to claim 44, characterised in that the motors (55) are easily disconnectable from the metering wheels or respectively from the drive shafts and are easily re-connectable.

**47.** Distributor according to claim 44, characterised in that the motors (55) are disposed so as to be laterally displaceable or pivotable.

**48.** Distributor according to claim 9, characterised in that the metering wheels (78, 79) are mounted on a shaft (80) in a freely rotatable manner, in that the shaft (80) has couplings (81, 82) which are each connectable to respective couplings (81, 82) of the metering wheels (78, 79), in that the shaft (80) is displaceably mounted, and in that the metering wheels (78, 79), adjacent one another, are connectable to the shaft (80) via the couplings (81, 82) by a displacement of the shaft (80).

**Revendications**

**1.** Epandeur notamment distributeur pneumatique d'engrais, comportant un réservoir d'alimentation (1) muni d'orifices de sortie et de roues de dosage (2) réparties en groupe, entraînées par un dispositif d'entraînement (8, 9, 29, 39, 40) et dont la vitesse de rotation est réglable, pour transférer le produit qui sort en ruisselant des orifices de sortie dans des tuyaux (6) raccordés à au moins une machine soufflante et comportant des orifices de sortie disposés les uns à côté des autres transversalement par rapport à la direction de déplacement et avec des intervalles, la largeur d'épandage de l'éventail d'épandage générée par le produit sortant des orifices et soufflé contre des déflecteurs (7) placés devait les orifices de sortie représentant un multiple de la largeur du réservoir d'alimentation (1), le dispositif d'entraînement (8, 9, 29, 39, 40) permettant par modification de la vitesse de rotation des roues de dosage (2) réglables, d'augmenter ou de diminuer la quantité distribuée, en agissant à partir du siège du conducteur, même pendant la distribution de produit, distributeur caractérisé en ce qu'à chaque roue de dosage ou chaque groupe de roues de dosage est associé un dispositif d'entraînement (8, 9, 29, 39, 40) indépendant, de façon que chaque roue de dosage ou chaque groupe de roues de dosage puissent être entraînés indépendamment à la même vitesse de rotation ou à une vitesse de rotation différente.

**2.** Distributeur selon la revendication 1, caractérisé par un moyen d'entraînement réglable (8, 9, 29, 39, 40) indépendant associé à chaque groupe de roues de dosage (2).

**3.** Distributeur selon la revendication 1 ou 2, caractérisé par un moteur (39, 40) indépendant associé à chaque groupe de roues de dosage.

**4.** Distributeur selon la revendication 1, caractérisé par une transmission de réglage (39, 40) propre à chaque groupe de roues de dosage.

**5.** Distributeur selon la revendication 1 ou 2, caractérisé par un entraînement à roue de friction (29) avec au moins deux arbres de sortie (34), la vitesse de rotation des arbres de sortie (34) se réglant indépendamment et en ce qu'à chaque arbre de sortie (34) est associé un groupe de roues de dosage.

**6.** Distributeur selon la revendication 1 ou 2, caractérisé par une transmission de réglage (47) ou un moteur d'entraînement réglable et en outre les roues de dosage sont des roues de poussée (44) coulissant axialement.

**7.** Distributeur selon la revendication 3, caractérisé en ce que les moteurs sont des moteurs hydrauliques (39, 40) et en ce que pour la régulation des moteurs hydrauliques, en plus des soupapes de régulation, il est prévu un distributeur réglable (42).

**8.** Distributeur selon la revendication 1 ou 2, caractérisé par une transmission réglable (8, 9) ou un moteur réglable et en ce qu'en plus, pour les groupes (20, 23) de roues de dosage (2), il est prévu au moins une boîte de vitesses (18, 19) ayant au moins trois rapports.

9. Distributeur selon la revendication 1, caractérisé par au moins deux moteurs électriques réglables (55) pour l'entraînement des groupes de cylindres de dosage (51, 66, 67, 72, 73, 78, 79) qui se règlent à partir du siège du conducteur par un dispositif de réglage (98, 100, 105, 106) prévu dans le tracteur qui tracte le distributeur, de façon à permettre de régler à la fois un fonctionnement synchrone des moteurs électriques (55) avec même vitesse de rotation ou des vitesses de rotation différentes pour las moteurs électriques (55) et en ce que ces moteurs électriques (55) peuvent être arrêtés ou mis en marche simultanément et indépendamment.

10. Distributeur selon la revendication 9, caractérisé en ce que les moteurs électriques (55) sont équipés d'un réducteur (56, 63).

11. Distributeur selon la revendication 9, caractérisé en ce que les moteurs électriques (55) possèdent deux plages de vitesse de rotation.

12. Distributeur selon la revendication 9, caractérisé en ce que les arbres de sortie des moteurs électriques (55) ou les arbres de doseur (52, 59, 70, 75, 76, 80) sont équipés de capteurs (98, 103) pour détecter la vitesse de rotation des arbres de doseur (52, 69, 70, 75, 76, 80) ou les arbres de sortie.

13. Distributeur selon la revendication 12, caractérisé en ce que les détecteurs (99, 103) génèrent des signaux qui sont affichés sur le moniteur (100, 106) du tracteur.

14. Distributeur selon la revendication 12, caractérisé en ce que de préférence pour chaque moteur, on a un affichage représentatif.

15. Distributeur selon la revendication 9, caractérisé en ce que pour régler la vitesse de rotation des moteurs électriques (55), on a des potentiomètres (97).

16. Distributeur selon la revendication 9, caractérisé en ce que pour régler la vitesse de rotation des moteurs électriques (55), il est prévu au moins un organe de réglage à courant continu (104).

17. Distributeur selon la revendication 9, caractérisé en ce qu'il comporte au moins un générateur de courant (108) qui est de préférence entraîné à partir de la prise de force du tracteur par l'intermédiaire de l'arbre de la machine soufflante (91).

18. Distributeur selon la revendication 17, caractérisé en ce que le générateur de courant est un alternateur (108) suivi d'au moins un redresseur pour alimenter des moteurs en courant continu (55).

19. Distributeur selon la revendication 17, caractérisé en ce que les alternateurs (108) proviennent de préférence d'une fabrication en grande série par exemple d'une fabrication en grande série destinée aux véhicules automobiles.

20. Distributeur selon la revendication 17, caractérisé en ce que l'alternateur (108) injecte du courant dans le réseau embarqué du distributeur pour l'alimentation des moteurs électriques (55) et le circuit embarqué est équipé d'un accumulateur (109).

21. Distributeur selon la revendication 20, caractérisé en ce que l'accumulateur est l'accumulateur du tracteur.

22. Distributeur selon la revendication 20, caractérisé en ce que l'accumulateur d'énergie est un accumulateur (109) installé sur le distributeur.

23. Distributeur selon les revendications 9 et 20, caractérisé en ce que l'accumulateur (109) a une capacité telle que le courant qu'il fournit suffit pour alimenter les moteurs électriques (55) entraînant les organes de dosage pour un essai de distribution lorsque le générateur (108) n'est pas entraîné.

24. Distributeur selon la revendication 9, caractérisé en ce que les moteurs électriques (55) sont entraînés par le courant du générateur du tracteur.

25. Distributeur selon la revendication 9, caractérisé par au moins deux moteurs électriques (55) et en outre chaque fois un embrayage et les groupes d'organes de dosage sont subdivisés.

26. Distributeur selon la revendication 9, caractérisé par au moins quatre moteurs électriques (55) réglables et commutables séparément.

**27.** Distributeur selon la revendication 9, caractérisé par une installation de surveillance qui affiche le mouvement de rotation des organes de dosage ou l'arrêt des organes de dosage.

**28.** Distributeur selon la revendication 9, caractérisé par un dispositif permettant d'entraîner manuellement les organes de dosage.

**29.** Distributeur selon la revendication 9, caractérisé en ce que les moteurs électriques (55) peuvent être entraînés sélectivement dans les deux sens de rotation.

**30.** Distributeur selon la revendication 9, caractérisé en ce que lors du branchement du moteur électrique (55), on commande tout d'abord pendant un court instant un mouvement de rotation inverse avant que le moteur électrique (55) entraîne les organes de dosage (51, 66, 67, 72, 73, 78, 79) dans leur sens de transfert.

**31.** Distributeur selon la revendication 9, caractérisé en ce que le mouvement inverse de courte durée est effectué automatiquement lors du branchement des moteurs électriques (55) entraînant les organes de dosage (51, 66,, 67, 72, 73, 78, 79)

**32.** Distributeur selon la revendication 9, caractérisé par un commutateur manuel qui permet de commander le mouvement inverse des moteurs électriques (55) entraînant les organes de dosage.

**33.** Distributeur selon la revendication 9, caractérisé en ce que les organes de dosage (51) peuvent au moins s'effacer élastiquement, par groupes de façon que les organes de dosage (51) puissent s'effacer en cas de couple excessif, puis être repoussés dans leur position initiale.

**34.** Distributeur selon la revendication 9, caractérisé en ce que les moteurs électriques (55) comportent au moins un réducteur (56, 63) à un seul rapport.

**35.** Distributeur selon la revendication 34, caractérisé en ce que le moteur électrique (55) ou le réducteur (56, 63) comportent une sortie sur deux côtés.

**36.** Distributeur selon la revendication 35, caractérisé en ce que le réducteur (56) comporte un arbre creux.

**37.** Distributeur selon la revendication 35, caractérisé en ce que le réducteur (63) comporte deux arbres de sortie.

**38.** Distributeur selon la revendication 35, caractérisé en ce que le réducteur (56, 63) est un réducteur à vis.

**39.** Distributeur selon la revendication 35, caractérisé en ce que le réducteur est une transmission planétaire.

**40.** Distributeur selon la revendication 9, caractérisé en ce que les moteurs (55) sont branchés pour qu'ils se mettent en oeuvre successivement avec un léger décalage.

**41.** Distributeur selon la revendication 40, caractérisé en ce que le décalage (temporisation) est d'une durée tellement courte qu'il n'est pratiquement pas perceptible ou que subjectivement il n'apparaît pas que tous les moteurs (55) ne sont pas mis n oeuvre simultanément.

**42.** Distributeur selon la revendication 40, caractérisé en ce que les moteurs (55) sont mis en oeuvre automatiquement successivement, de manière rapprochée.

**43.** Distributeur selon la revendication 40, caractérisé en ce que les moteurs (55) sont mis en oeuvre successivement, par une commande manuelle.

**44.** Distributeur selon la revendication 9, caractérisé en ce que les roues de dosage sont facilement démontables.

**45.** Distributeur selon la revendication 44, caractérisé en ce que les moteurs (55) sont facilement démontables.

**46.** Distributeur selon la revendication 44, caractérisé en ce que les moteurs (55) sont facilement débrayables des organes de dosage ou des arbres d'entraînement et peuvent de nouveau être facilement embrayés.

**47.** Distributeur selon la revendication 44, caractérisé en ce que les moteurs (55) peuvent coulisser ou s'effacer latéralement.

**48.** Distributeur selon la revendication 9, caractérisé en ce que les organes de dosage (78, 79) sont montés libres en rotation sur un arbre (30) qui est équipé d'embrayages (81, 82) susceptibles d'être embrayés avec les embrayages (81, 82) des organes de dosage (78, 79), l'arbre (80) étant monté coulissant et le coulissement de cet arbre (80) permet de relier les organes de dosage (78, 79) à l'arbre (83) par l'intermédiaire des embrayages (81, 82).

FIG. 1          FIG. 2

EP 0 219 015 B1

FIG.3

FIG. 4

# FIG. 5

EP 0 219 015 B1

FIG. 6

FIG. 7

7      6      7      24

25

FIG. 8

S

A

FIG. 9

S

R

B

FIG. 10

H

S

C

FIG. 11

S

r

D

FIG. 12

r

S

r

EP 0 219 015 B1

FIG. 13

EP 0 219 015 B1

FIG. 14

56  55

57

**FIG. 15**

57
56

**FIG. 16**

50
58
62
51
61
59
53
60

**FIG. 17**

54

65  65

**FIG. 18**

55
64
63  64

FIG.19

EP 0 219 015 B1

# FIG. 20

EP 0 219 015 B1

# FIG. 21

EP 0 219 015 B1

FIG.22

FIG.23

FIG.24

EP 0 219 015 B1